# EUROPEAN PATENT SPECIFICATION

(11) **EP 4 123 878 B1**
(45) Date of publication and mention of the grant of the patent: **27.03.2024**
(21) Application number: 22195299.7
(22) Date of filing: 23.04.2019
(51) Int. Cl.: H02K 1/14, H02K 3/12, H02K 15/02, H02K 15/04

(54) **STATOR FOR ELECTRIC MOTORS AND METHOD FOR PROVIDING SUCH STATOR**
STATOR FÜR ELEKTROMOTOREN UND VERFAHREN ZUR BEREITSTELLUNG SOLCH EINES STATORS
STATOR POUR MOTEURS ÉLECTRIQUES ET PROCÉDÉ DE FOURNITURE D'UN TEL ROTOR

(43) Date of publication of application: 25.01.2023
(62) Divisional of application: 19425030.4
(73) Proprietor: Marsilli S.p.A., 26012 Castelleone (CR) (IT)
(72) Inventor: PARATI, Gian Battista, 26012 CASTELLEONE CR (IT)
(74) Representative: Modiano, Gabriella Diana

(56) References cited:
- JP-A- 2007 288 848
- US-A1- 2011 041 319
- US-A1- 2015 162 787
- US-B2- 8 166 628

## Description

The present invention relates to a stator for electric motors, in particular of the continuous hairpin type. The present invention also relates to a method and a processing line for providing such stator.

Nowadays, in the field of stators for electric motors, one very important type of stator is known as a "hairpin" stator, in which the wires are braided with suitable twisting or curves, and in which the ends of the conducting wires jut out longitudinally from the stator.

The present invention is useful and practical particularly for providing stator packs (i.e. the part of the stator that comprises the stator teeth and the windings) for motors of the type known as "continuous hairpin", in which in the stator pack there are one or more cylindrical (or basket) windings arranged along two mutually coaxial cylindrical surfaces.

Providing this type of windings presents considerable technical problems, which lie in the difficulty in obtaining windings with a cylindrical geometry with the necessary twists, and in the positioning of such windings between the stator teeth.

In the known art, the wires are generally braided after having been positioned along a cylindrical surface.

The movement, the bending and the positioning of the wires is often long, complex and costly to carry out. Furthermore, the results are not always satisfactory.

JP 2007 288848 discloses a stator for electric motor as define in the preamble of claim 1.

US 2011 041319 discloses a method of manufacturing stator coil

The aim of the present invention is to overcome the above mentioned drawbacks of the known art, by devising a stator of the type described above which is simple to provide, reliable, and economically competitive when compared to the known art.

Within this aim, an object of the present invention is to also make available a method and a processing line that make it possible to provide windings of the continuous hairpin type simply, reliably and at low cost.

Another object of the present invention is to provide a method and a processing line that enable an optimal management of the pitch of the wires during the entire cycle of providing the stator pack.

Another object of the invention is to provide a stator and also a method and a processing line for providing the stator that are alternatives to the known art.

A further object of the invention is to provide a method and a processing line for providing windings of the continuous hairpin type which ensure a high level of precision in the execution of the windings.

This aim and these and other objects which will become better apparent hereinafter are all achieved by a stator according to claim 1.

This aim and these and other objects which will become better apparent hereinafter are also achieved by the method according to claim 3, as well as by a processing line according to claim 5.

Further characteristics and advantages of the invention will become better apparent from the description of some preferred, but not exclusive, embodiments of a stator and of a processing line, which are illustrated by way of non-limiting example with the aid of the accompanying drawings wherein:
Figure 1 is a perspective view of a possible embodiment of a stator outside the scope of the claimed invention;
Figure 2 is a cross-sectional view of the stator in Figure 1;
Figures 3-6, 8 and 9 are cross-sectional views, each one of a different possible embodiment of a stator outside the scope of the claimed invention
Figure 7 is a cross-sectional view of the stator according to the invention;
Figure 10 is a cross-sectional view taken along a vertical plane of the stator in Figure 9;
Figure 11 is a schematic diagram in plan view from above of the stator in Figure 1;
Figure 12 is a side view of a straight winding shown outspread;
Figure 13 is a cross-sectional view taken along the line XIII-XIII of the winding in Figure 12;
Figure 14 shows the individual wires bent and separated;
Figures 15 to 17 show successive stages of the step of bending of the method according to the invention;
Figures 18 and 19 show the bent wires obtained with the step of bending;
Figures 20 to 30 show successive stages of the step of winding of the method;
Figures 31 to 35 show the step of inserting the inner stator teeth of the method;
Figures 36 to 60 show successive stages of the step of coiling of the method;
Figures 61 to 66 show successive stages of the step of repositioning the winding of the method;
Figures 67 to 69 show the step of affixing the teeth of the method.

With reference to the figures, the stator for electric motors, generally designated by the reference numeral 100, should be understood to be a stator pack (i.e. the critical part of the stator that comprises the stator teeth and the windings) plus optionally other elements necessary to operation, which, being conventional, are omitted from this description.

The stator 100 therefore comprises a plurality of teeth 22, 23 which are arranged circumferentially (in a ring), along the side wall of an ideal cylinder, so as to form a substantially hollow cylindrical body 20, which comprises an inner cylindrical cavity 91 which is adapted to accommodate a rotor.

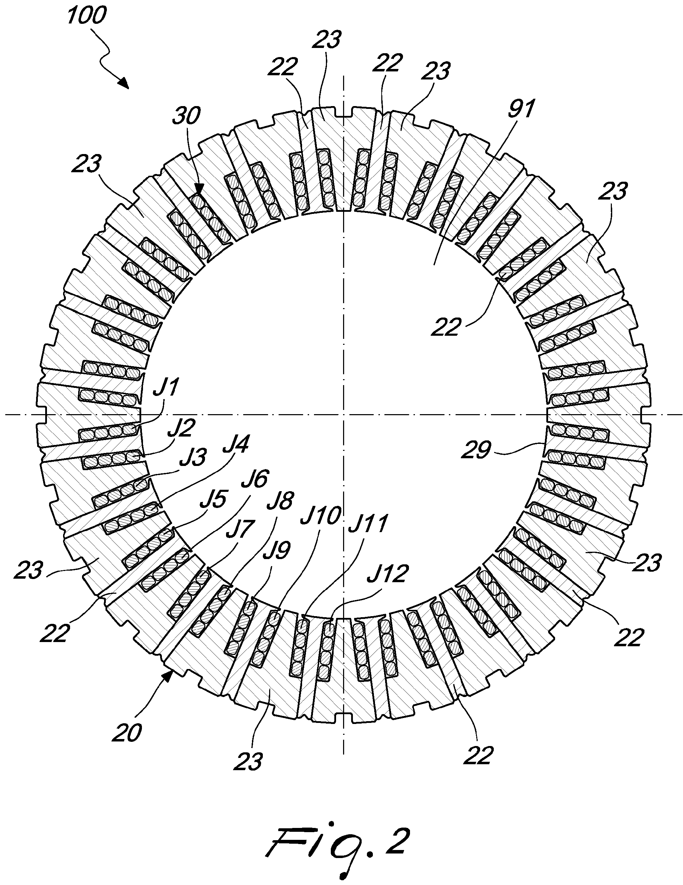

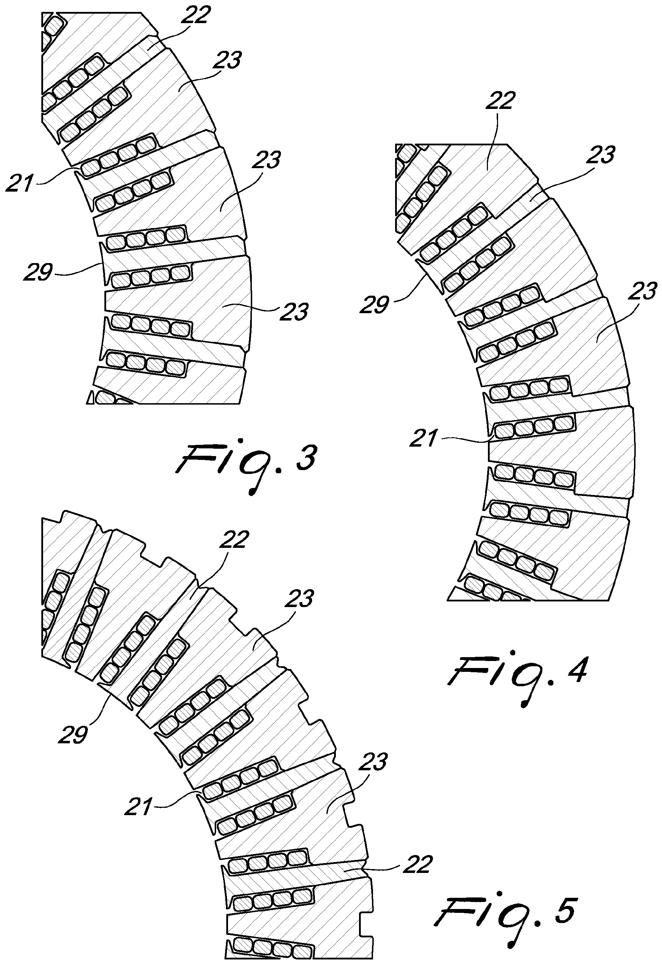

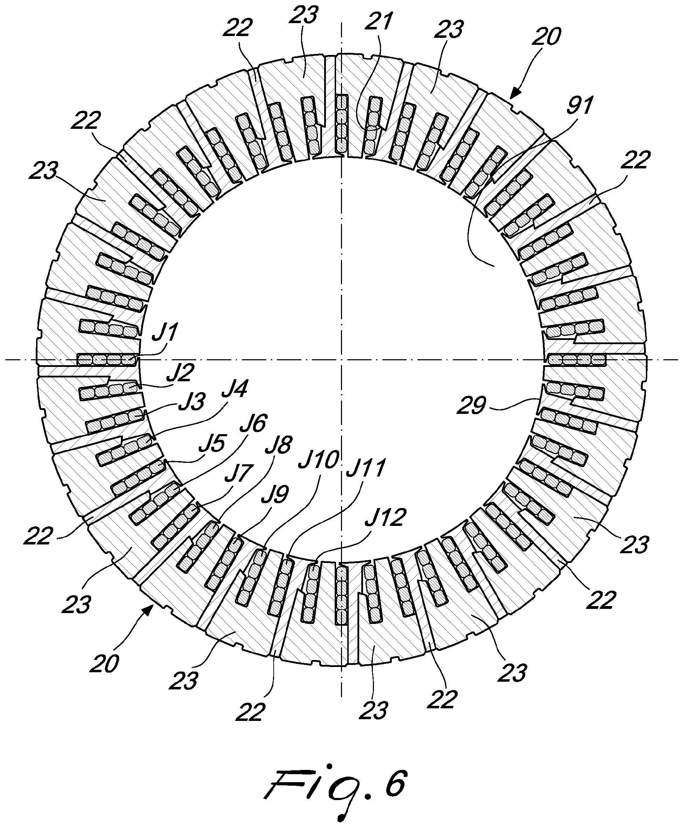

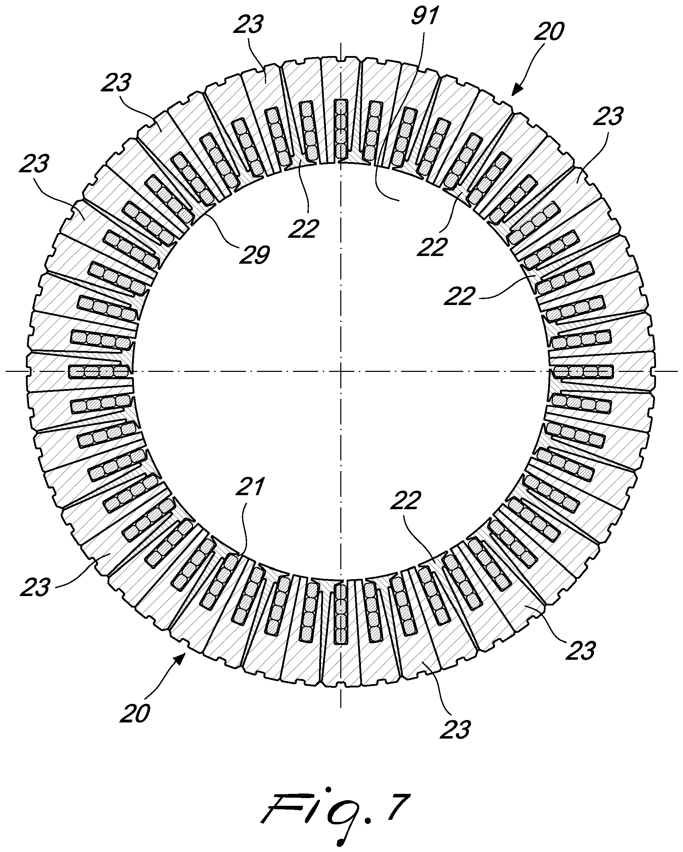

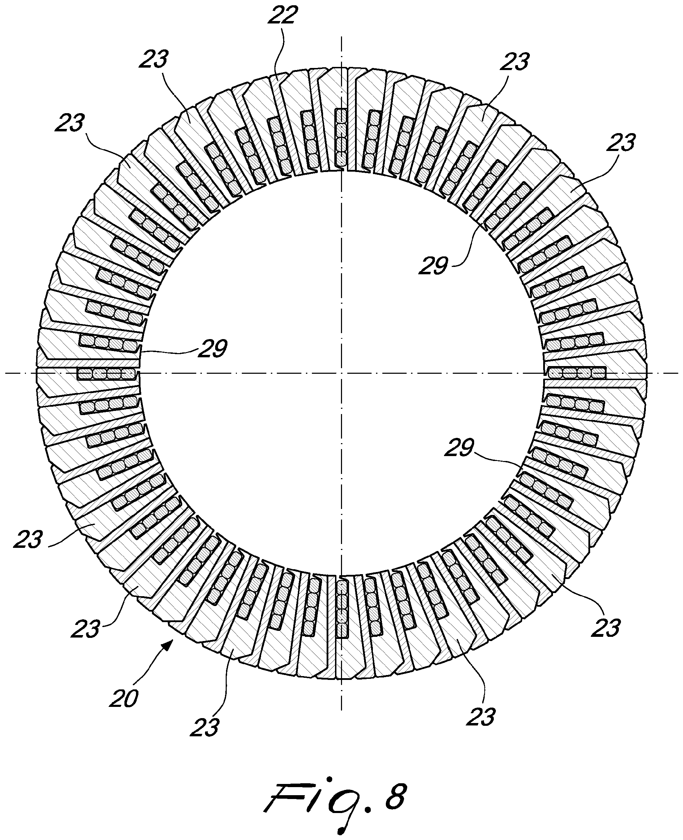

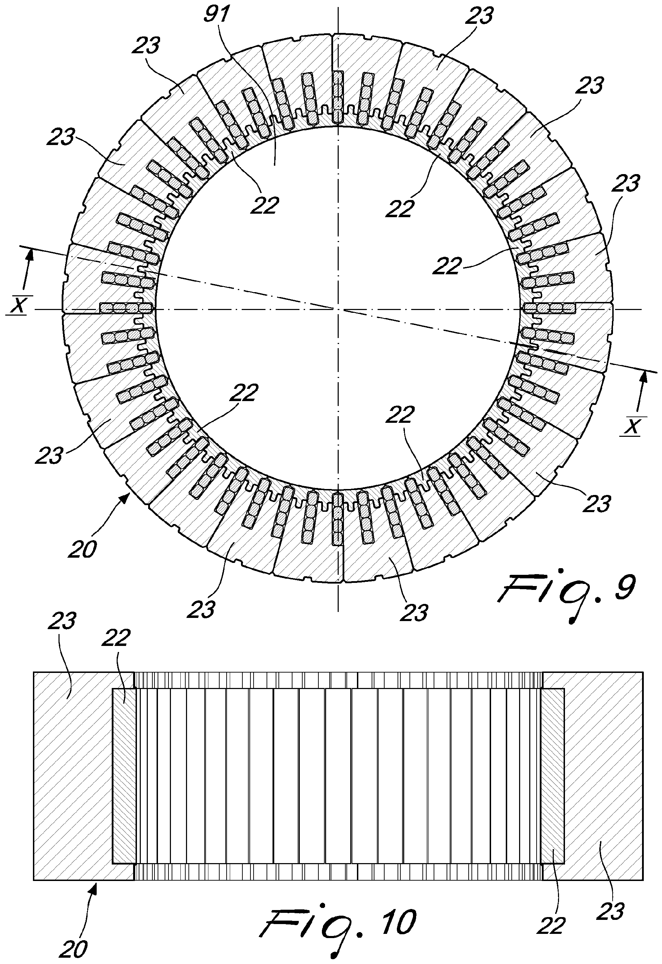

In between them, the teeth 22, 23 define a plurality of inner longitudinal cavities 21 (i.e. adjacent to the inner wall of the hollow cylindrical body 20 and therefore to the inner cylindrical cavity 91) which are arranged radially; such inner longitudinal cavities 21 in some embodiments (like those shown in Figures 2-8) are open toward the inner cylindrical cavity 91, in other embodiments (like in the one shown in Figure 9) they are included in the cylindrical body but not directly connected with the inner cylindrical cavity 91 and are open only at the longitudinal ends.

Arranged inside these inner longitudinal cavities 21 are a plurality of wires J1-J12 which are bent and braided, and which form at least one cylindrical winding 30 (or basket winding) of the stator.

As shown in the figures, the teeth 22, 23 comprise a plurality of inner teeth 22 which can be inserted radially from the inside of the cylindrical winding 30 (i.e. from the inside of the inner cylindrical cavity 91) alternated with a plurality of complementary outer teeth 23 which can be inserted from the outside of the cylindrical winding 30 (i.e. from the outside of the substantially cylindrical body 20). In other words: the inner teeth 22 have a shape that makes them insertable radially from the inside, for example by being wedge-shaped in cross-section with the base positioned toward the inside of the cylindrical cavity and the tip jutting radially toward the outer wall of the cylinder body 20; and the outer teeth 23 have a shape that makes them insertable radially from the outside, for example by being wedge-shaped in cross-section with the base forming the outer wall of the cylinder body 20 and the tip jutting radially toward the inside of the cylindrical cavity 91.

Preferably, the inner teeth 22 have at least one end which is directed toward the outside of the outer wall of the cylinder body 20 so that it can be welded from the outside to the outer teeth 23, in the method for producing the stator 100.

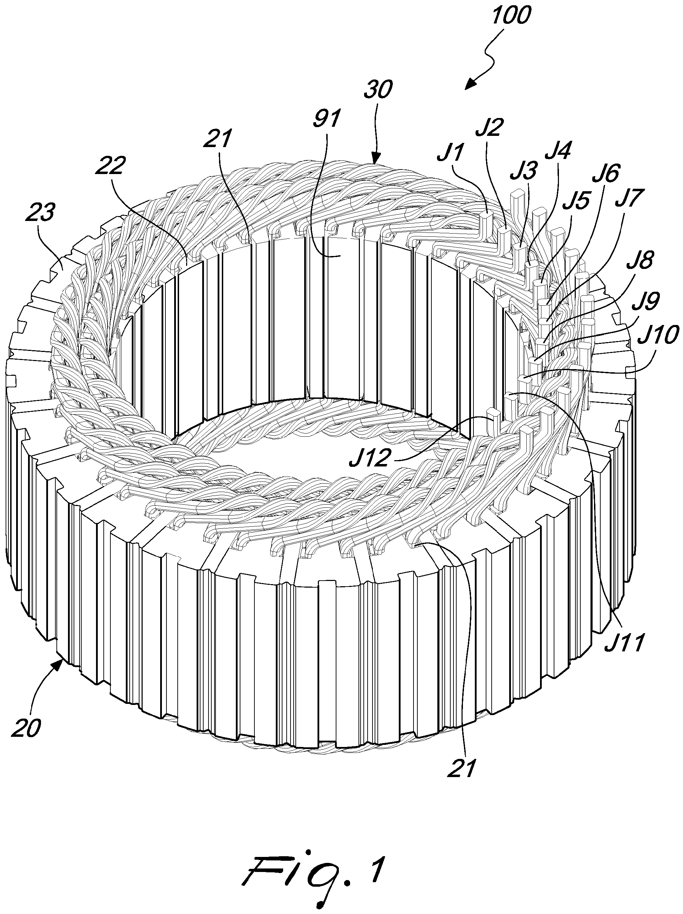

Even more preferably, the inner teeth 22 and the complementary outer teeth 23 are positioned so that each one of the inner longitudinal cavities 21 is defined between one of such inner teeth 22 and one of such outer teeth 23 (as in the examples in Figures 1-8).

In practice, the inner teeth 22 and the outer teeth 23 are welded together, preferably along an outer edge, so as to form a continuous ring, i.e., in other words, a single body that constitutes the aforementioned substantially cylindrical body 20 having the transverse cross-section substantially of an annulus.

The inner teeth 22 are provided with feet 29 (i.e. enlarged bases), which are aligned along the inner wall of the substantially cylindrical body 20 (i.e. along the surface that defines the inner cylindrical cavity 91). Such feet 29 close at least partially the inner longitudinal cavities 21 toward the inner cylindrical cavity 91, including behind them the wires 11-112 and more precisely the straight sections 1A-12A, 1B-12B of the wires which, as will be described in more detail below, occupy the inner longitudinal cavities 21.

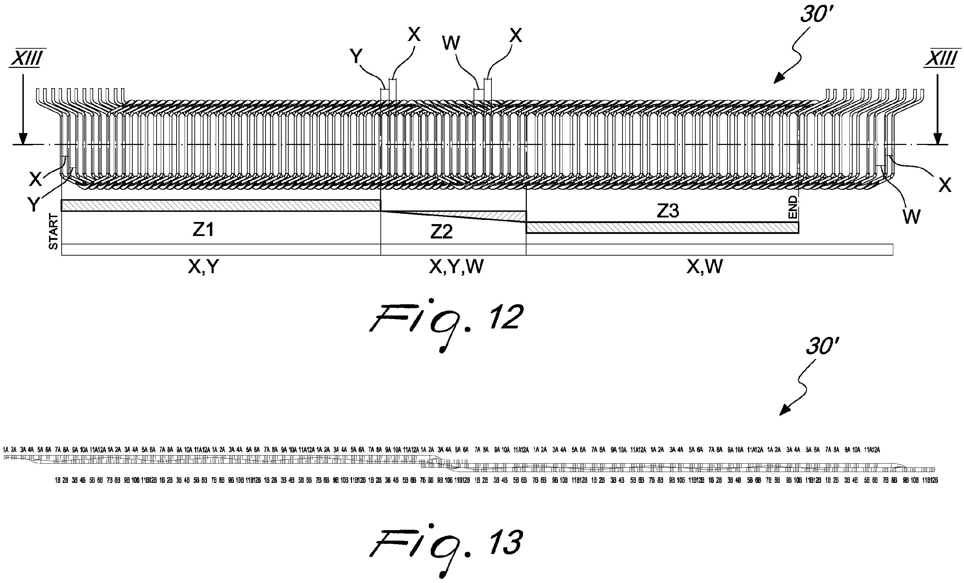

Advantageously, the wires J1-J12 are braided together so as to form a winding that is flattened transversely 30' (hereinafter simply "flattened winding" and designated with the reference numerals 30 and 30' which designate respectively its final, cylindrical shape when it is part of the stator 100 and a straight, outspread shape which it assumes in a stage of the production process which will be described below) which comprises a plurality of mutually parallel straight sections 1A-12A, 1B-12B (i.e. rectilinear) of wire which occupy the inner longitudinal cavities 21 which are also rectilinear and mutually parallel. Figure 12 shows a flattened straight winding 30' shown outspread.

Each one of such straight sections 1A-12A, 1B-12B of wire is spaced apart from the adjacent straight section of wire 1A-12A, 1B-12B by a respective winding pitch X, Y, W; the term "winding pitch X, Y, W" means the geometric distance between one straight section of wire 1A-12A, 1B-12B and the subsequent straight section of wire 1A-12A, 1B-12B, as indicated in Figure 12.

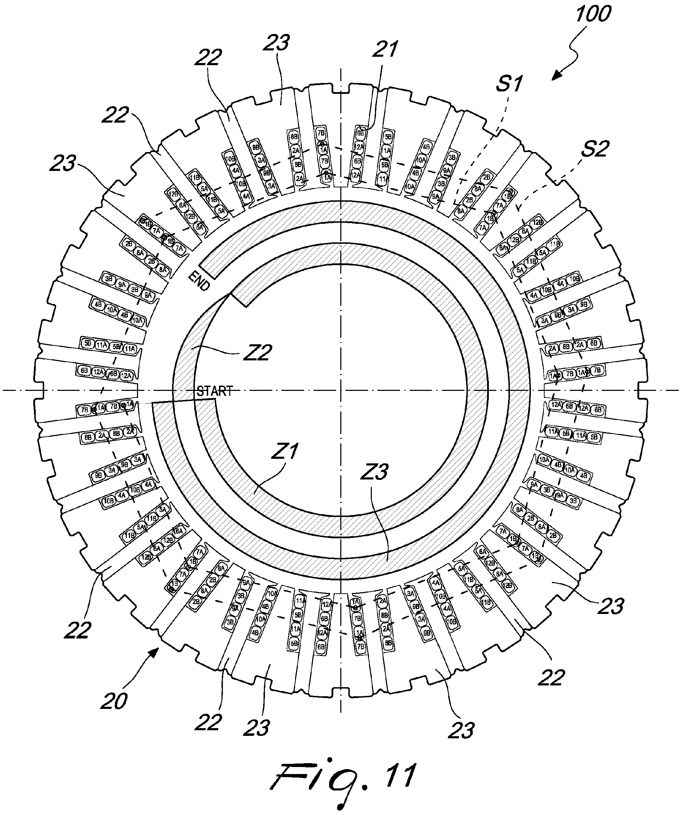

In the stator 100, the flattened winding 30 is wound at least twice onto itself so as to be arranged continuously along an inner cylindrical layer S1 and along an outer cylindrical layer S2 which is coaxial to the inner cylindrical layer S1: in practice, seen in cross-section as in Figure 11, the flattened winding 30 is arranged along two concentric circumferences arranged inside the wall of the cylindrical body 20. Figure 11 shows the path of the flattened winding 30 with a dotted broken line: it should be noted that such path forms an inner cylindrical layer S1 and an outer cylindrical layer S2.

Note that, in the preferred and illustrated embodiment, the flattened winding 30 is wound at least twice onto itself so that there are four straight sections (1A-12A, 1B-12B) of wire in each inner longitudinal cavity 21. In other embodiments, the flattened winding 30 is wound more than twice onto itself so that in each inner longitudinal cavity 21 there are more than four straight sections 1A-12A, 1B-12B of wire: for example in one embodiment the flattened winding 30 is wound three times about itself so that in each inner longitudinal cavity 21 there are six straight sections 1A-12A, 1B-12B of wire, in another embodiment the flattened winding 30 is wound four times onto itself so that in each inner longitudinal cavity 21 there are eight straight sections 1A-12A, 1B-12B of wire, etc.

In more detail, the flattened winding 30, 30' comprises:
- a first peripheral portion Z1, arranged along the inner cylindrical layer S1, in which the respective winding pitches comprise a first winding pitch X and a second winding pitch Y (i.e. each straight section 1A-12A, 1B-12B comprised in the first peripheral portion Z1 is spaced apart from the next straight section 1A-12A, 1B-12B by a distance equal to the first winding pitch X or by a distance equal to the second winding pitch Y, preferably in an alternating manner so that each straight section 1A-12A, 1B-12B is spaced apart from the next straight section 1A-12A, 1B-12B by a distance equal to the first winding pitch X and from the previous straight section by a distance equal to the second winding pitch Y or vice versa); the second winding pitch Y is preferably greater than the first winding pitch X;
- a second peripheral portion Z3, arranged along the outer cylindrical layer S2, in which the respective winding pitches comprise the first winding pitch X and a third winding pitch W (in the same way as explained previously with reference to the first peripheral portion Z1 and preferably in an alternating manner so that each straight section 1A-12A, 1B-12B is spaced apart from the next straight section 1A-12A, 1B-12B by a distance equal to the first winding pitch X and from the previous straight section by a distance equal to the third winding pitch W or vice versa); the third winding pitch W is greater than both the first X and the second Y winding pitch;
- an intermediate portion Z2 which connects the first and the second peripheral portion and is arranged with one end along the inner cylindrical surface S1 and with the other end along the cylindrical outer surface S2, in which the respective winding pitches comprise all the above mentioned first X, second Y and third W winding pitch (again in the same say as explained previously with reference to the first peripheral portion Z1).

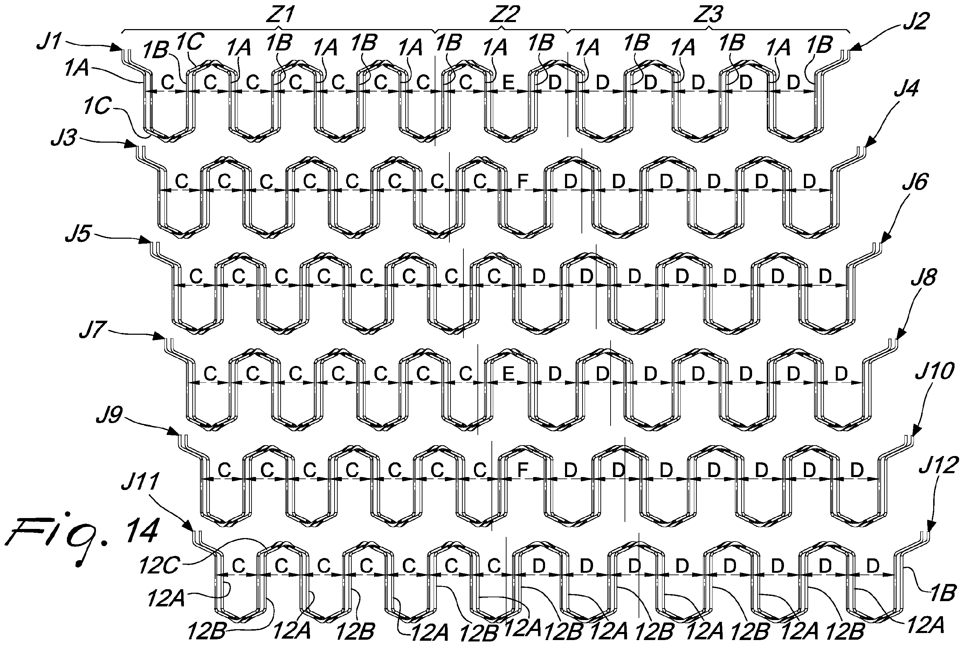

Turning now to analyze the structure of the flattened winding 30 in more detail, particular reference is made to Figure 14 in which the wires J1-J12 are shown separate and spread out along a flat surface and in which the sections of wire are numbered only for the first wire J1 and for the twelfth wire J12 so as not to excessively over-complicate the figures (the numbers corresponding to the intermediate straight sections are visible in Figure 13); note that each one of the wires 11-112, which in the preferred embodiments are twelve in number (in the non-limiting case of a winding with 12 wires), is bent substantially sinusoidally, so that the straight sections 1A-12A, 1B-12B are connected at the ends by alternated cusp sections 1C -12C. Each wire 11-112 is arranged continuously along the first S1 and the second S2 cylindrical layer.

In each one of the wires J1-J12, the straight sections 1A-12A, 1B-12B comprised in the first peripheral portion Z1 are mutually spaced apart by a first pitch distance C and the straight sections 1A-12A, 1B-12B comprised in the second peripheral portion Z2 are mutually spaced apart by a third pitch distance D which is greater than the first pitch distance C.

In more detail the wires J1-J12 comprise:
- a first J1 and a second J2 wire, in which: a first intermediate straight section 1B, 2B comprised in the intermediate portion Z2 is spaced apart from a second intermediate straight section 1A, 2A, also comprised in the intermediate portion Z2, by the aforesaid first pitch distance C; the second intermediate straight section 1A, 2A is spaced apart from a third intermediate straight section 1B, 2B, also comprised in the intermediate portion Z2, by a second pitch distance E which is greater than the first pitch distance C and less than the third pitch distance D; the third intermediate straight section 1B, 2B is spaced apart from a fourth intermediate straight section 1A, 2A by the third pitch distance D;
- a third J3 and a fourth J4 wire, in which: a first intermediate straight section 3B, 4B comprised in the intermediate portion is spaced apart from a second intermediate straight section 3A, 4A, comprised in the intermediate portion, by the first pitch distance C; the second intermediate straight section 3A, 4A is spaced apart from a third intermediate straight section 3B, 4B, comprised in the intermediate portion Z2, by a fourth pitch distance F which is greater than the third pitch distance D; the third intermediate straight section 3B, 4B is spaced apart from a fourth intermediate straight section 3A, 4A by the third pitch distance D;
- a fifth J5 and a sixth J6 wire, in which: a first intermediate straight section 5B, 6B comprised in the intermediate portion Z2 is spaced apart from a second intermediate straight section 5A, 6A, comprised in the intermediate portion Z2, by the first pitch distance C; the second intermediate straight section 5A, 6A is spaced apart from a third intermediate straight section 5B, 6B, comprised in the intermediate portion Z2, by the third pitch distance D; such third intermediate straight section 5B, 6B is spaced apart from a fourth intermediate straight section 5A, 6A by the third pitch distance D;
- a seventh J7 and an eighth J8 wire, in which: a first intermediate straight section 7B, 8B comprised in the intermediate portion Z2 is spaced apart from a second intermediate straight section 7A, 8A, comprised in the intermediate portion Z2, by the second pitch distance E; the second intermediate straight section 7A, 8A is spaced apart from a third intermediate straight section 7B, 8B, comprised in the intermediate portion Z2, by the third pitch distance D; such third intermediate straight section 7B, 8B is spaced apart from a fourth intermediate straight section 7A, 8A by the third pitch distance D;
- a ninth J9 and a tenth J10 wire, in which: a first intermediate straight section 9B, 10B comprised in the intermediate portion Z2 is spaced apart from a second intermediate straight section 9A, 10A, comprised in the intermediate portion Z2, by the fourth pitch distance F; such second intermediate straight section 9A, 10A is spaced apart from a third intermediate straight section, comprised in the intermediate portion Z2, by the third pitch distance D; such third intermediate straight section 9B, 10B is spaced apart from a fourth intermediate straight section 9A, 10A by the third pitch distance D;
- an eleventh J11 and a twelfth J12 wire, in which: a first intermediate straight section 11B, 12B comprised in the intermediate portion Z2 is spaced apart from a second intermediate straight section 11A, 12A, also comprised in the intermediate portion Z2, by the third pitch distance D; the second intermediate straight section 11A, 12A is spaced apart from a third intermediate straight section 11B, 12B, comprised in the intermediate portion Z2, by the third pitch distance D; such third intermediate straight section is spaced apart from a fourth intermediate straight section 11A, 12Aby the third pitch distance D.

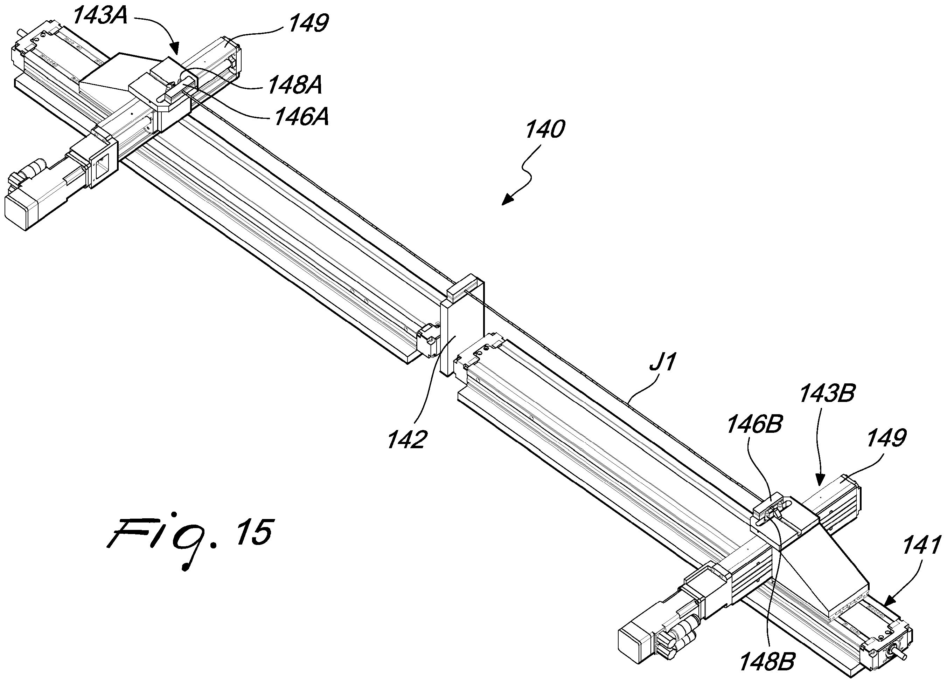

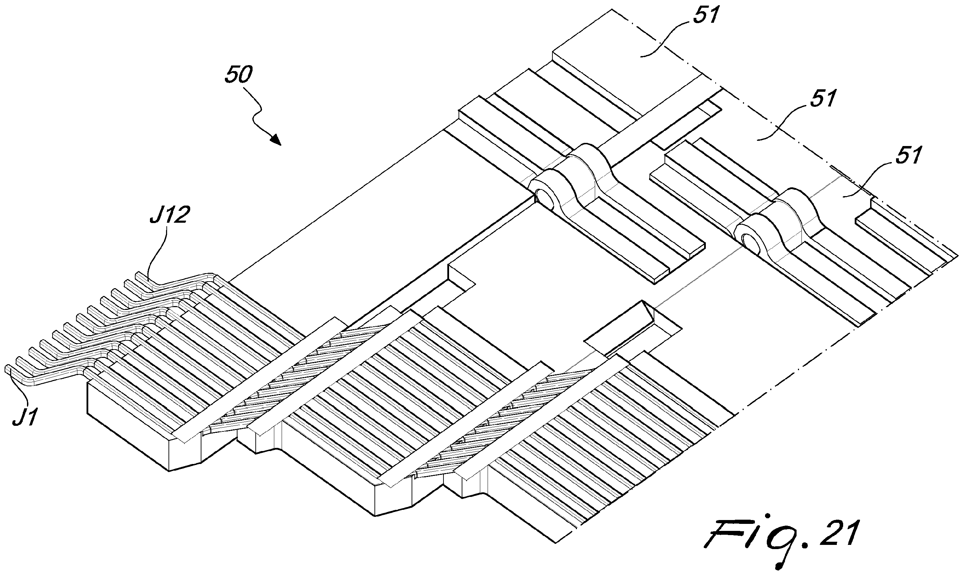

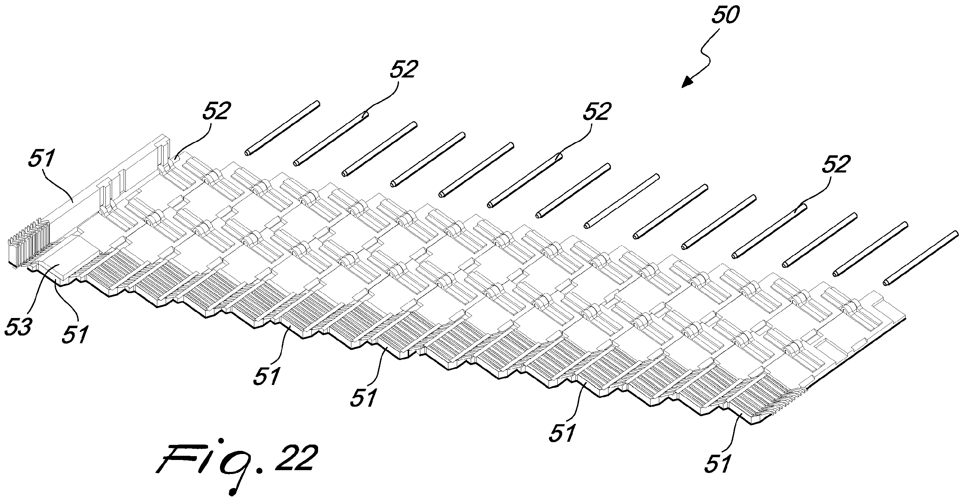

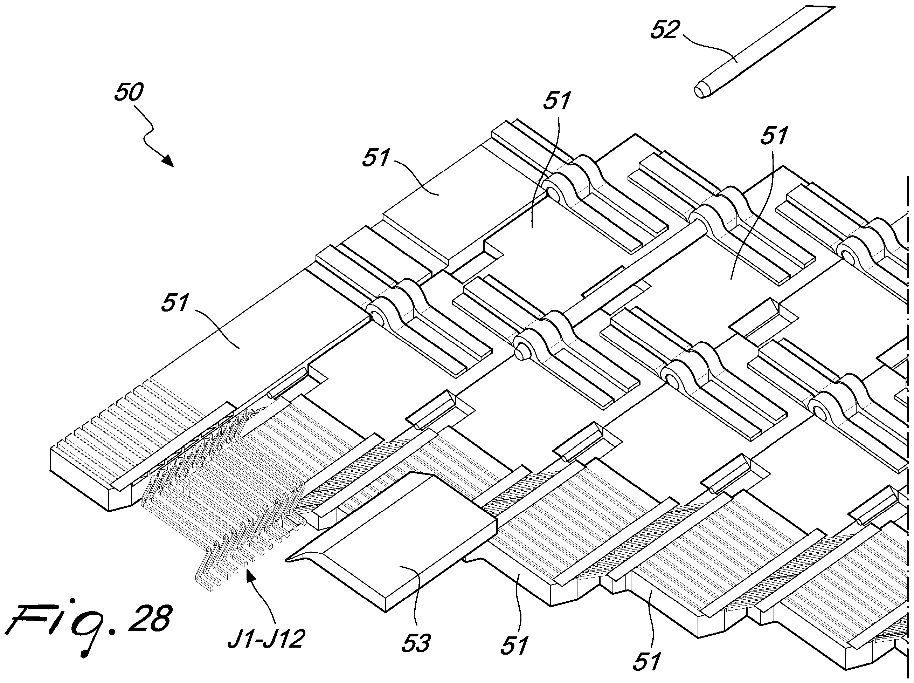

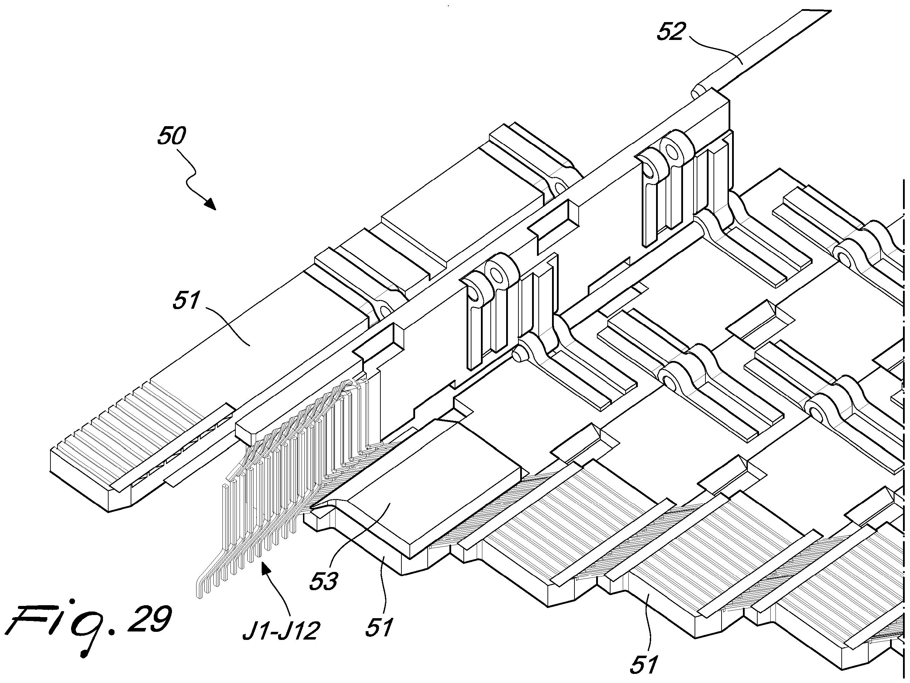

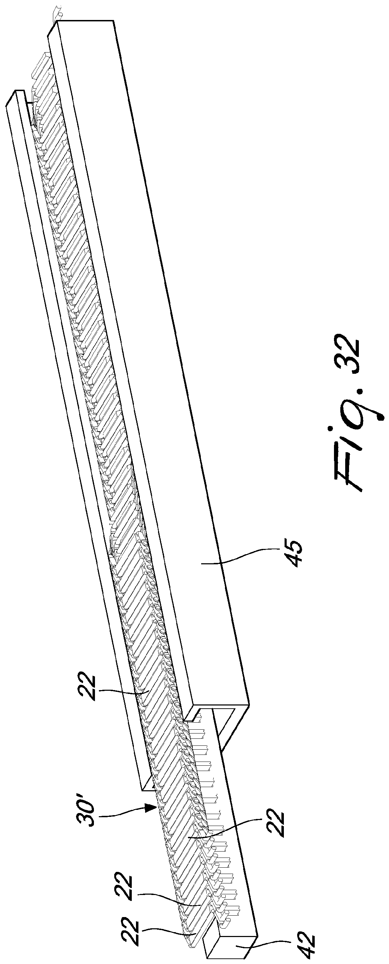

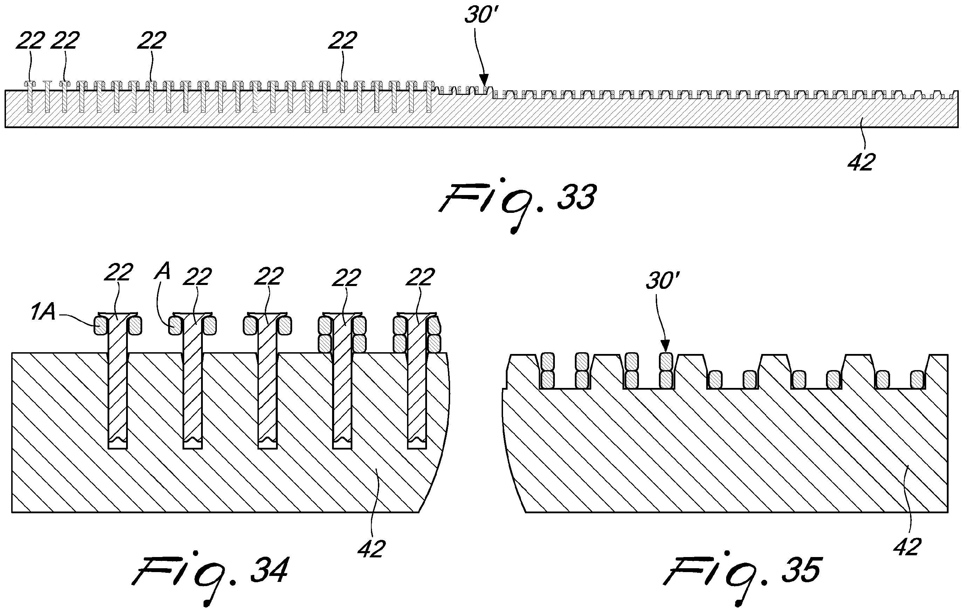

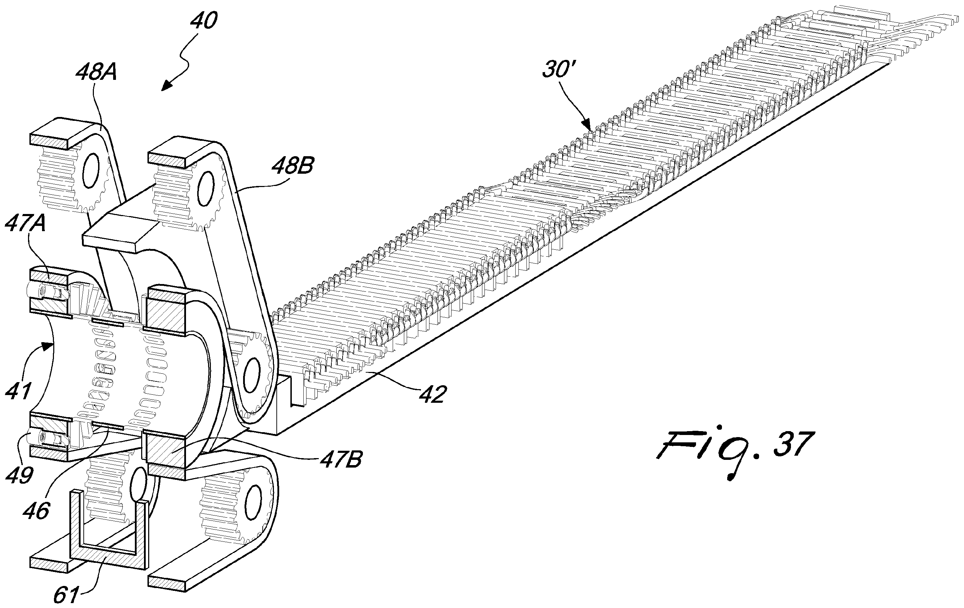

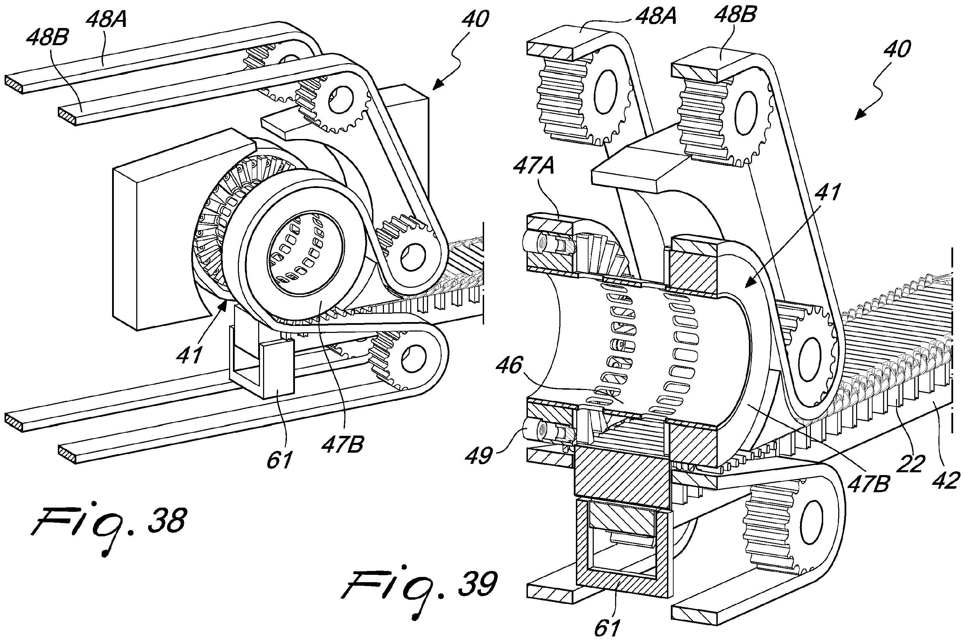

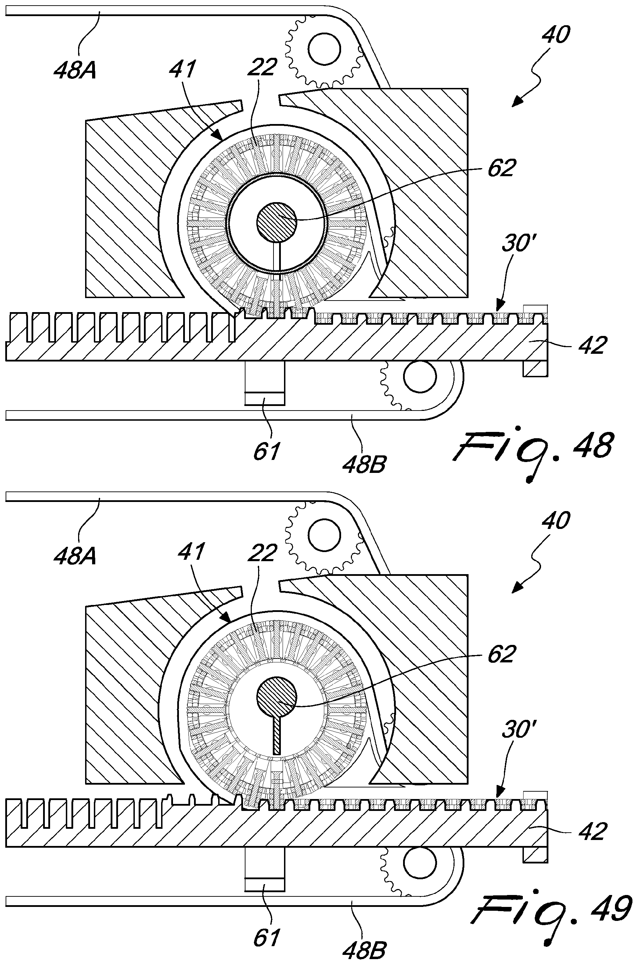

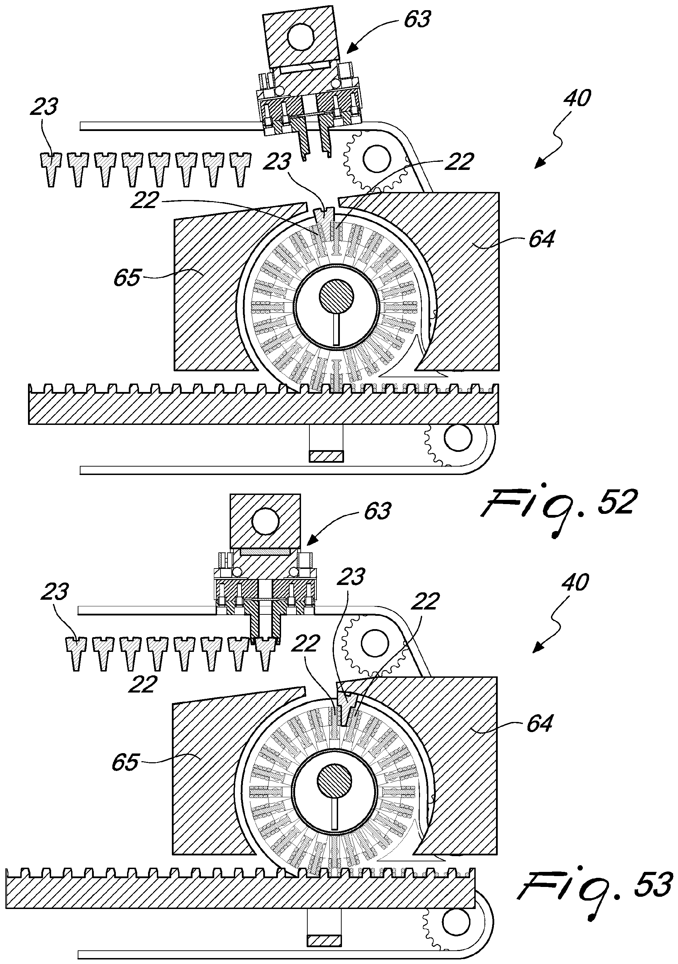

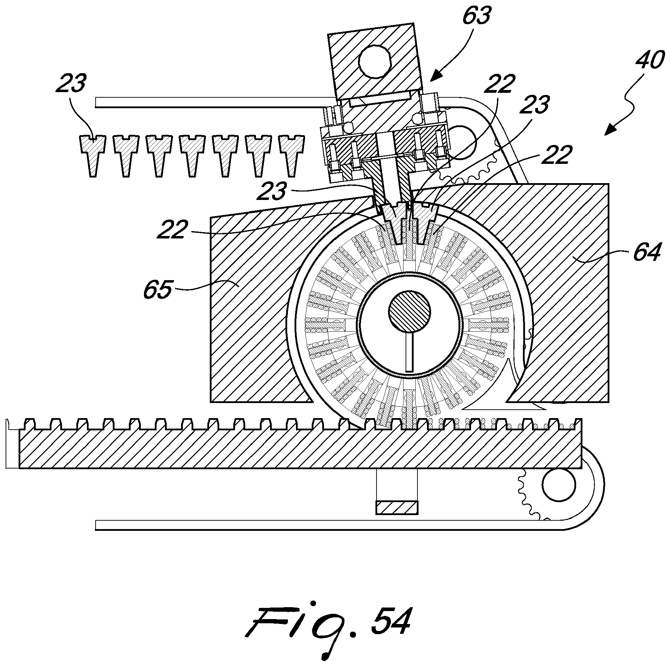

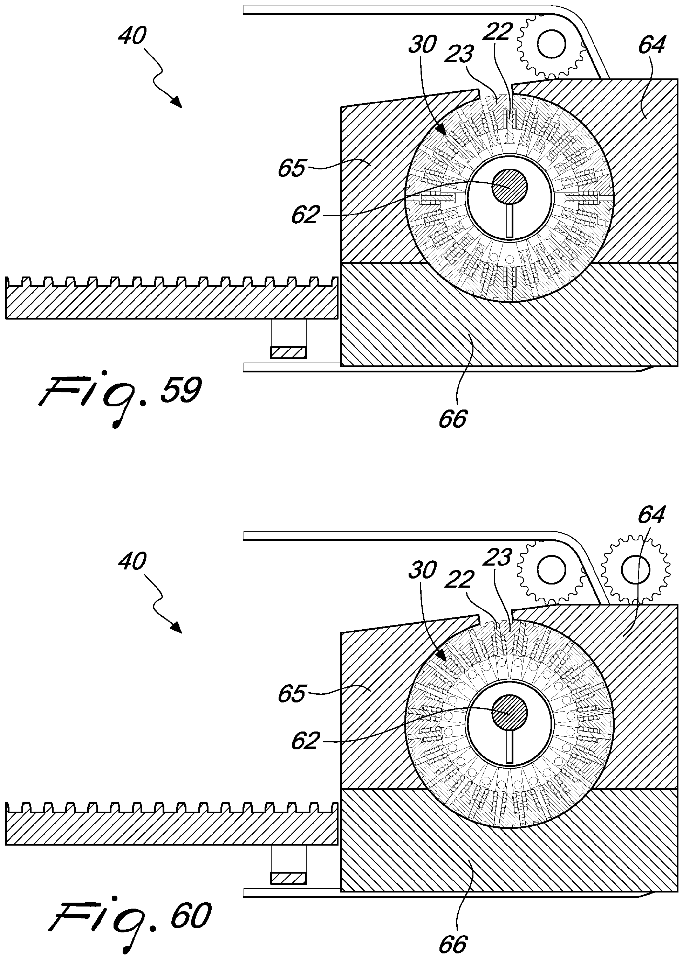

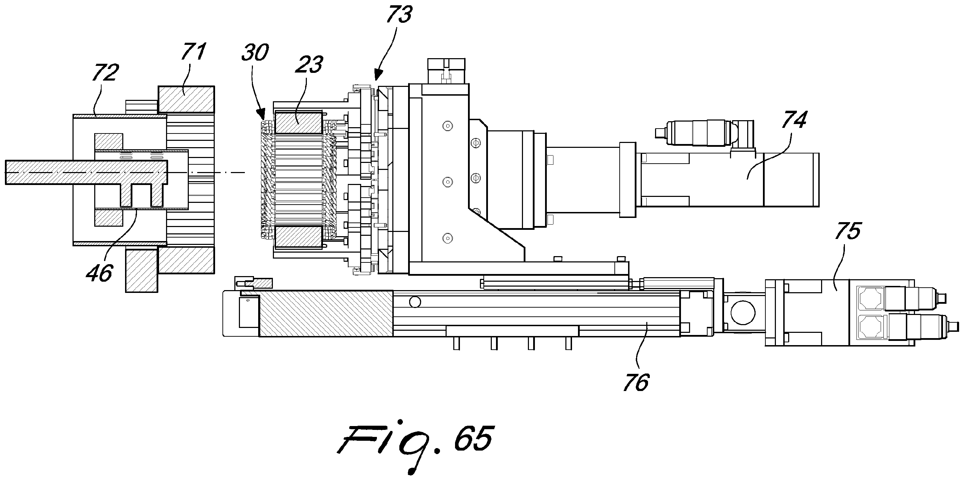

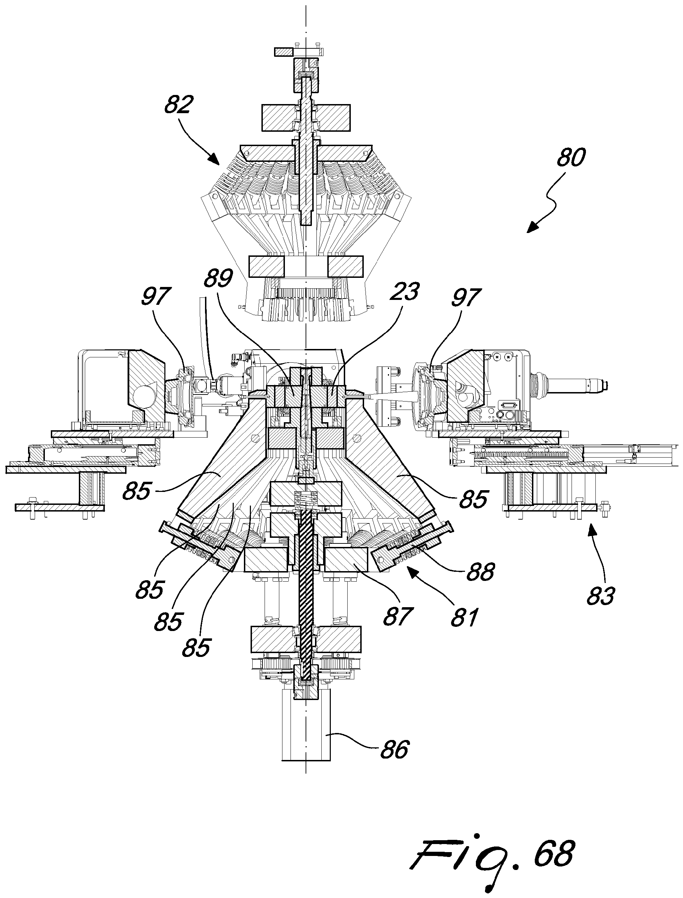

Figures 15 to 69 show an example of the method for providing a stator 100 according to the invention.

According to such method, first a plurality of wires 11-112 are produced in a known manner, and preferably twelve wires (in the non-limiting case of a winding with 12 wires), which are identical, faced and stripped at their end regions, for example by way of a wire reel, a rectifier, an advancer, a stripper, or a cut. The length of the wires 11-112 conveniently varies as a function of the diameter and of the number of wires in the inner longitudinal cavities 21 of the stator 100.

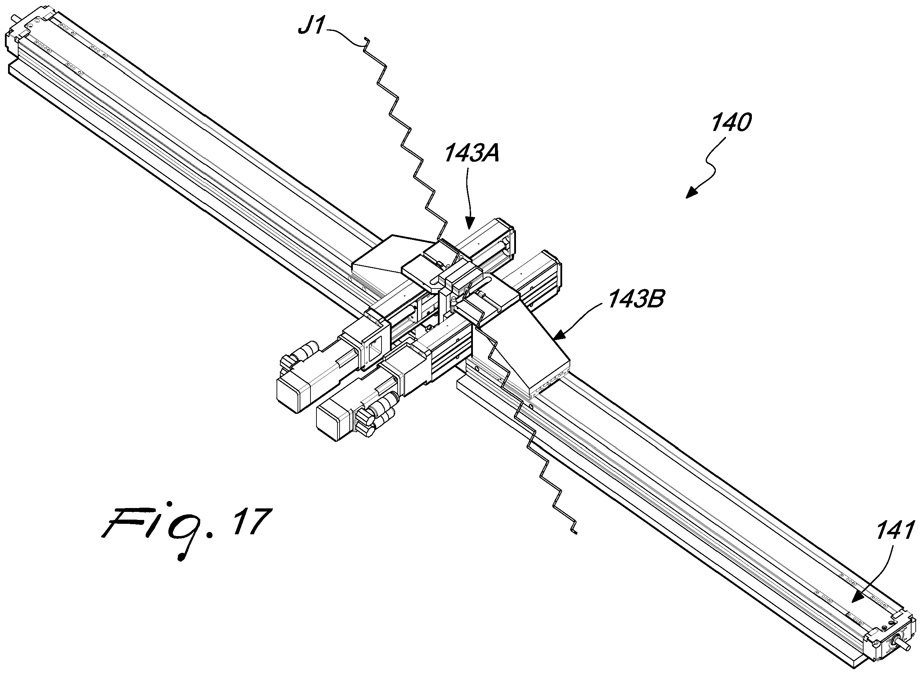

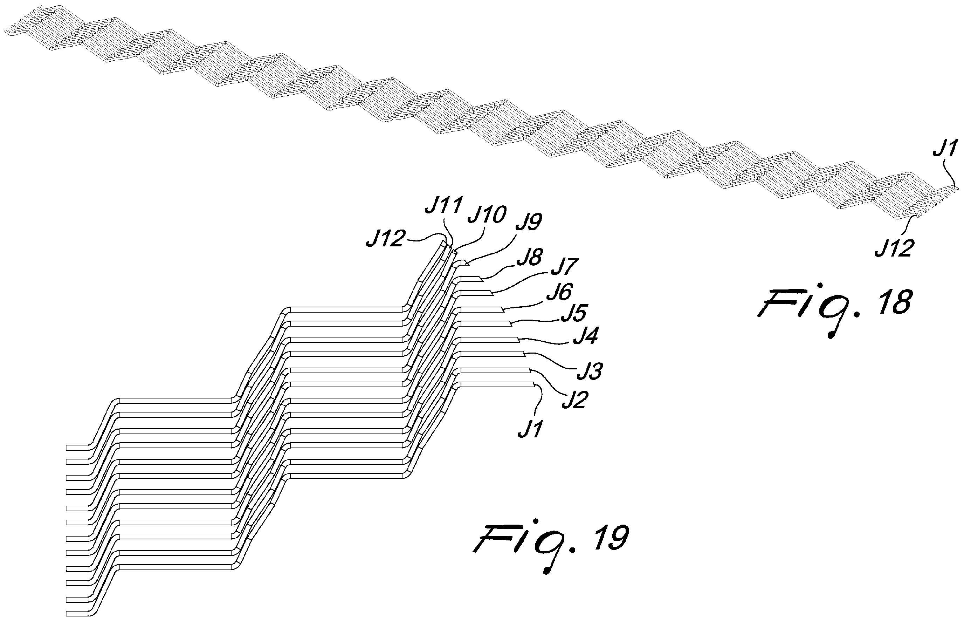

Then, in the general sections that are common to all the embodiments, the method comprises a step of bending (illustrated in Figures 15 to 19), in which the wires are bent along a substantially zigzag broken line (i.e. substantially in a triangular wave or stepped pattern), as illustrated in Figures 17 and 18.

Such bending is carried out for example using a bending apparatus 140 which comprises a horizontal guide 41, a central fixed gripping device 142 which is fixed on the horizontal guide 141, and two bending assemblies 143A and 143B each one of which can slide along the horizontal guide 141 from a respective end of the guide 141 toward the central fixed gripping device 142. Each one of the bending assemblies 143A, 143B comprises: a device for holding and guiding the wire 146A, 146B; a device for bending 148A, 148B which is configured to push the wire J1 transversely, along an axis perpendicular to that wire J1, proximate to the device for holding and guiding the wire 146A so as to bend that wire J1. In more detail, the bending device 148A, 148B comprises two vertical rollers which can slide along a transverse guide 149 which is perpendicular to the horizontal guide 141, and are actuated by an actuator.

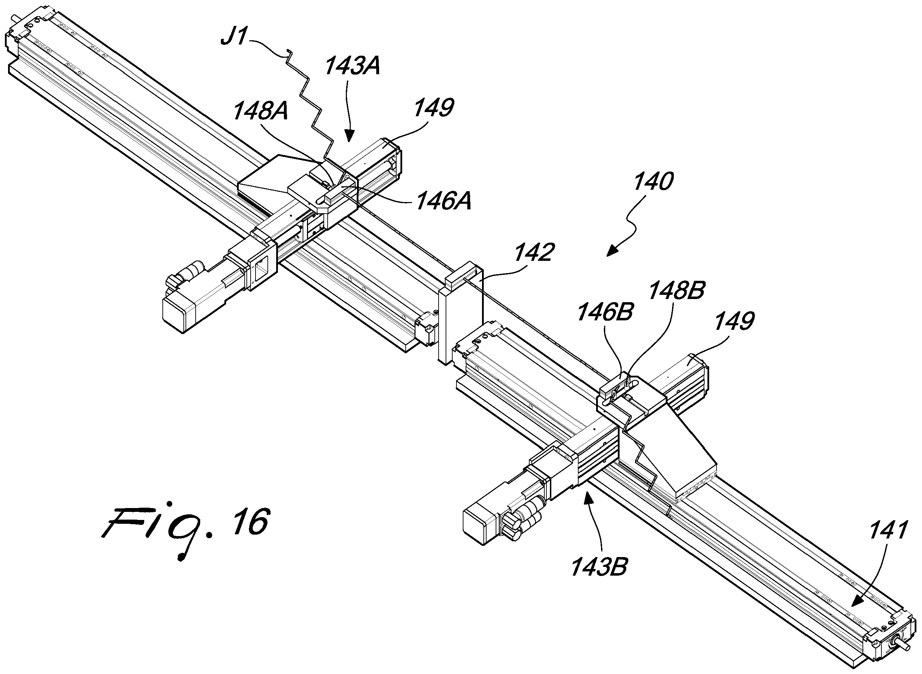

In practice, the wire J1 is fixed parallel to the horizontal guide 141 by way of the central fixed gripping device 142 and initially gripped at the ends by the device for holding and guiding the wire 146A, 146B as in Figure 15; then the bending assemblies 148A, 148B are made to slide along the axis of the wire 11, toward each other, and are stopped at the points where it is necessary to bend the wire 11, at each one of these points the wire J1 being gripped again by the device for holding and guiding the wire 146A, 146B and, by way of the bending devices 148A, 148B, the bends are carried out (see Figures 16 and 17). The method just described is carried out individually for each wire J1-J12 so as to obtain a plurality of wires as in Figure 18.

Subsequently, in a step of winding, the bent wires J1-J12 are wound together so as to provide a flattened straight winding 30' (i.e. substantially a transversely flattened solenoid) which comprises a plurality of straight sections 1A-12A, 1B-12B of wire which are mutually parallel and connected by cusp portions 1C-12C, as described previously and illustrated in Figures 12, 31 and 32.

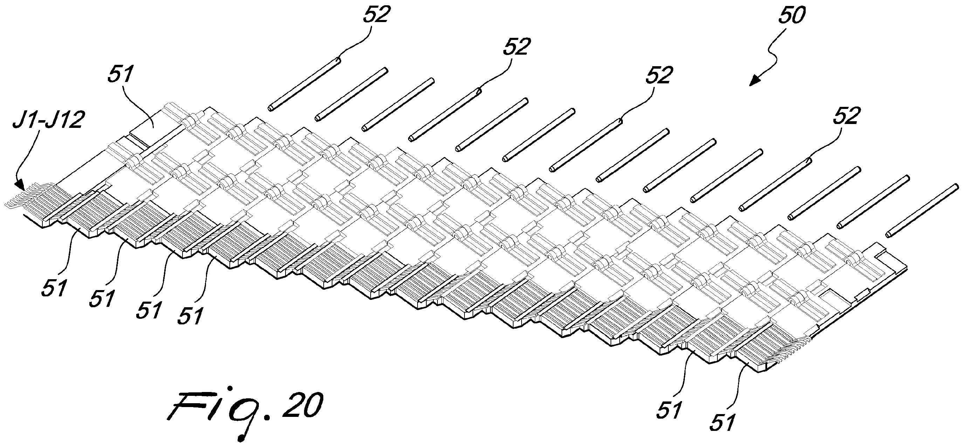

Such step of winding is carried out for example by a winding assembly 50 as shown in Figures 20-30.

The winding assembly 50 comprises a plurality of flat supporting elements 51 which are arranged side-by-side and offset. Such flat supporting elements 51 are mutually hingeable, temporarily and removably, by way of removable pins 52, so that each flat support 51 can be folded onto the adjacent flat support.

The flat supports 51 are conveniently configured to support and keep the bent wires J1-J12 in position and correctly spaced apart, according to a predefined pitch and position so as to obtain, at the end of the winding, a flattened straight winding 30' like that described previously. In practice, the bent wires 11-112 are positioned aligned on the flat supports 51 and specifically the wires 11-112 are positioned so that the rotation axis of the flat supports 51 coincides with the theoretical bending points of the wires J1-J12.

The flat supports 51 are then made to rotate, by an actuator (not shown), one at a time, in succession, folding each flat support 51 book-fashion onto the next: following each rotation of a flat support 51, this is disengaged and removed in order to allow the rotation of the next one. In this manner, with each rotation of a flat support 51 a series of turns is produced.

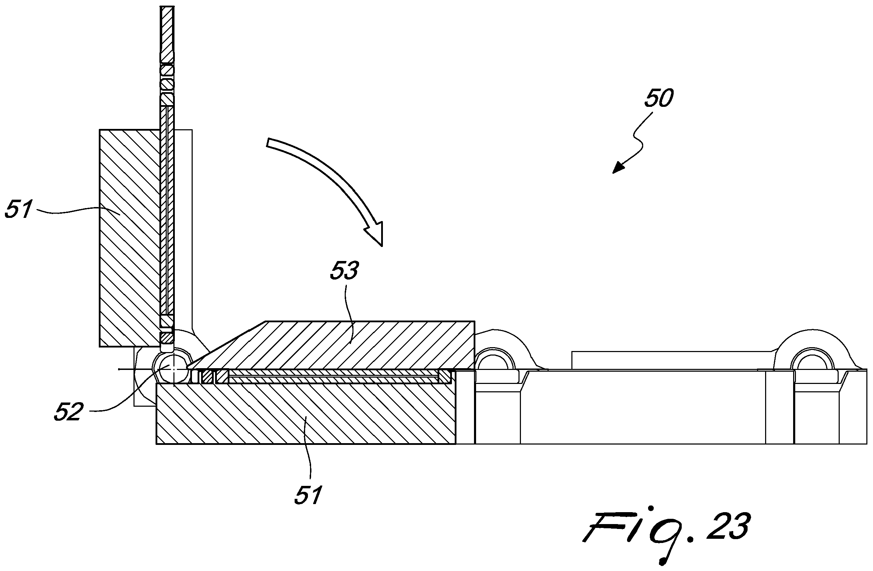

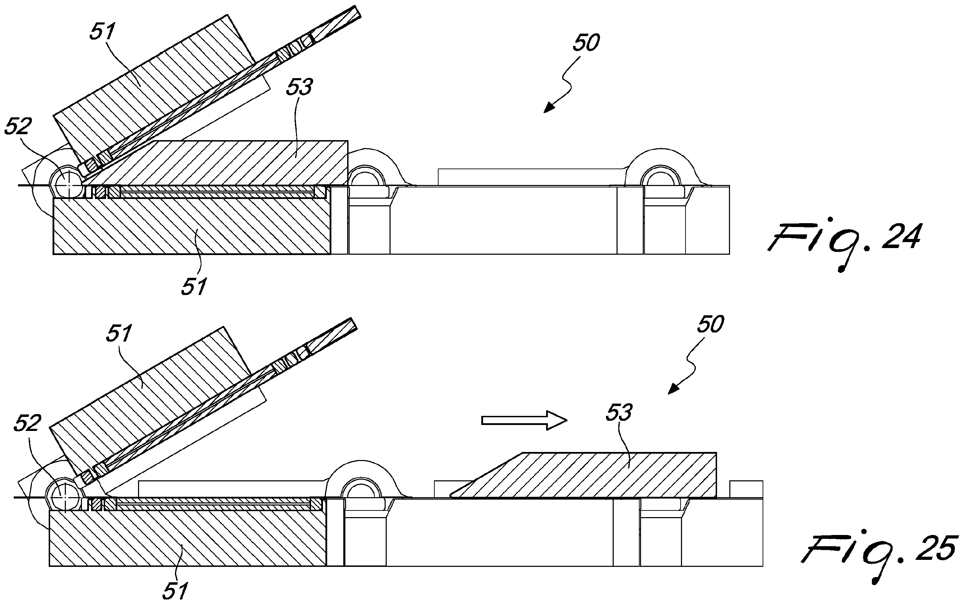

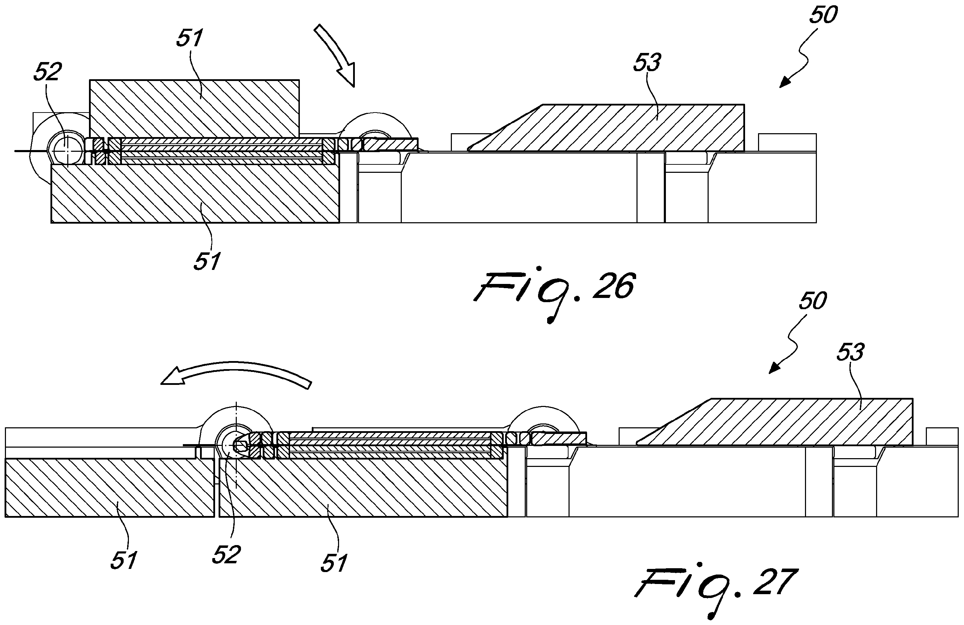

Preferably, as shown in Figures 23-27, the book-fashion rotation of each flat support onto the next is carried out with the aid of a blocking wedge 53 which is positioned over the wires J1-J12 with the function of immobilizing the wires J1-J12 at least for most of the bending angle and of providing a fixed reference for the bending: the flat support 51 is made to rotate until it meets an inclined abutment surface of the blocking wedge 53 (Figure 24) and then the blocking wedge 53 is taken away (Figure 25) in order to allow the completion of the bending (Figure 26).

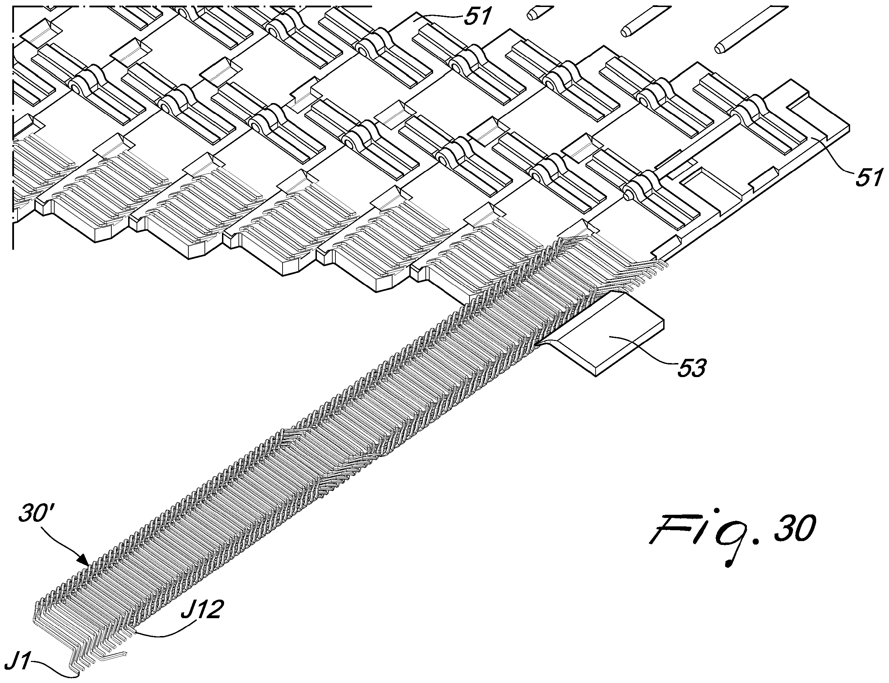

Once all the bendings have been carried out (in the example shown, fifteen bendings in a winding assembly 50 that comprises fifteen flat supporting elements 51), the flattened straight winding 30' is obtained (Figure 30).

Note that during the step of winding just described, each one of the wires J1-J12 is in practice further bent substantially sinusoidally, so that the straight sections 1A-12A, 1B-12B are connected at the ends by alternated cusp sections 1C-12C.

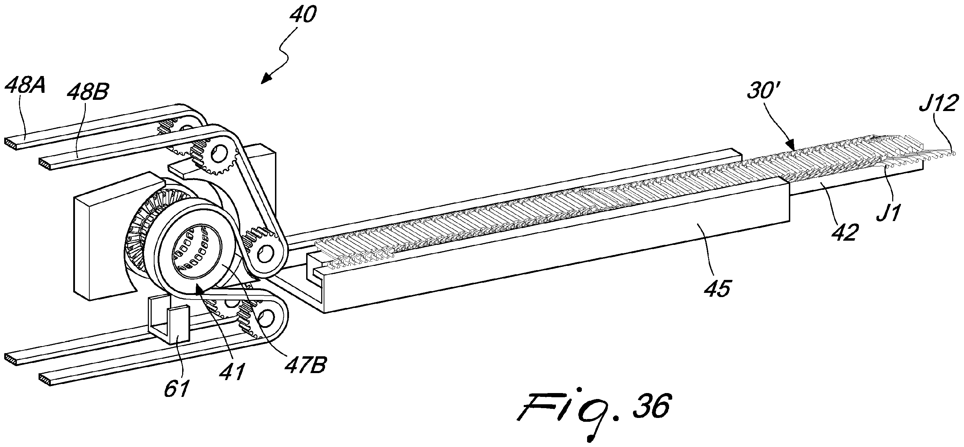

The method then entails a step of coiling, illustrated in Figures 36 to 61, in which the flattened straight winding 30' is curved along a cylindrical surface by rolling it at least twice around a drum 41 so as to convert the straight winding 30' to a cylindrical winding 30 of wires 11-112 which is wound at least twice onto itself so as to be arranged continuously at least along an inner cylindrical layer S1 and along an outer cylindrical layer S2 which is concentric to the inner cylindrical layer S1. At the end of this step of coiling, in practice, the cylindrical winding 30 of wires is positioned about the drum 41.

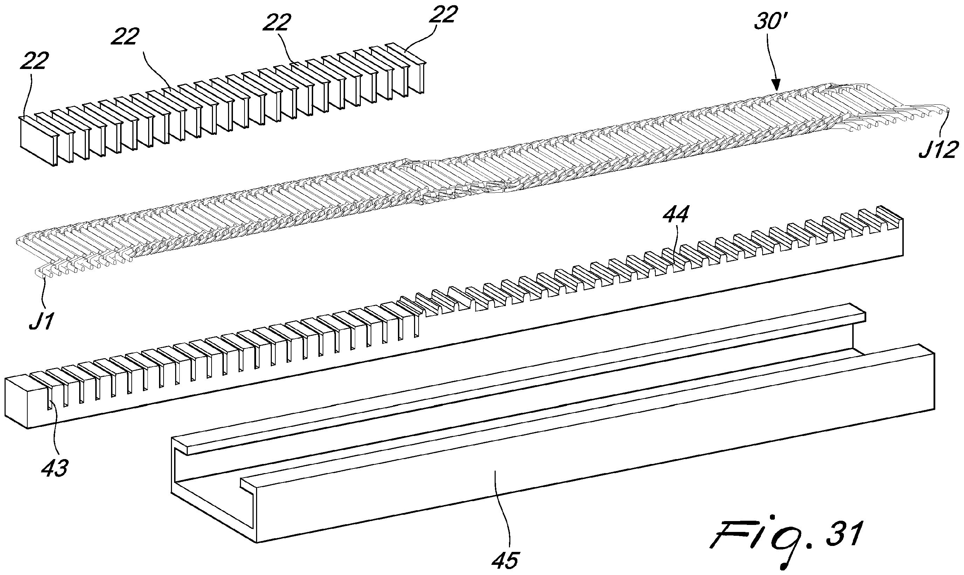

In the preferred embodiments, after the step of winding and before the step of coiling a step is carried out of inserting the inner stator teeth 22 (illustrated in Figures 31-35, in which the inner teeth 22 are inserted into the flattened straight winding 30') into adapted spaces between the straight sections 1A-12A, 1B-12B of the wires J1-J12 (therefore in the distances defined here as winding pitches X, Y).

Advantageously, the flattened straight winding 30' is positioned on a straight support 42. The straight support 42 is provided with: a plurality of first transverse slots 43 (arranged in the front part) which are adapted to be partially engaged by the inner teeth 22 so as to ensure the correct distance between those inner teeth 22 and at the same time the correct positioning of the outspread straight winding 30'; and with a plurality of second transverse slots 44 (arranged in the rear part) which are adapted to be engaged by the straight sections 1A-12B, 1B-12B of wire which at this stage are not engaged by the inner teeth 22, so as to maintain the correct pitch X, Y, W between the straight portions 1A-12B, 1B-12B of wire.

Preferably, the straight support 42 is slideably coupled to a straight guide 45 which is provided with side walls that ensure the correct transverse positioning of the straight winding 30' (for example inside a linear guide 45 which has a rectangular cross-section, open upward).

The step of coiling is carried out for example with a coiling apparatus 40 as shown in Figures 36-61.

The coiling apparatus 40 comprises the coiling drum 41 around which the straight winding 30' is wound. The drum 41, in turn, comprises a central tube 46 and two lateral flanges 47A, 47B which are coupled coaxially to the central tube 46 and which have an outside diameter that is greater than the latter. The outside diameter of the lateral flanges 47A, 47B constitutes in practice the inside diameter of the finished cylindrical winding 30.

Preferably, one of the two lateral flanges 47A is fixed and the other 47B is removable; both rotate integrally with the central tube 46.

The drum 41 is driven in rotation by a motor (not shown).

In more detail, in the preferred and illustrated embodiment, on the outside diameter of the lateral flanges run two respective belts 48A, 48B (one per flange) which are kept under tension by a load applied externally and which are configured to generate the necessary force to perform the coiling of the winding 30', 30 (from straight 30' to cylindrical 30), by pressing this against the outside diameter of the lateral flanges 47A, 47B. Such outside diameter (and more precisely the outer circumference) of the lateral flanges 47A, 47B therefore acts as a core onto which the winding 30 is wound.

Conveniently, the outer surfaces of the lateral flanges 47A, 47B are provided with seats (in number equal to the number of inner teeth 22 of the stator 100 which were previously inserted into the straight winding 30') which are adapted to accommodate the inner teeth 22.

One of the two lateral flanges 47A, 47B, and more precisely the fixed one 47B, contains sprung pressers 49 which are adapted to keep the inner teeth 22 in position once inserted.

The coiling apparatus 40 also comprises a vertical presser 61 which is positioned outside the drum 41, under it, and is configured to exert a radial pressure, vertically toward the rotation axis of the drum 41, on the inner teeth 22.

In practice, in order to carry out the coiling, the straight guide 45 is positioned so as to direct the straight support 42 along a direction that is substantially tangential to the drum 41, with the front part toward the drum 41. The straight support 42 is then moved toward the drum 41 so as to feed it with the straight winding 30'; at the same time, the drum 41 is made to rotate so as to begin coiling the straight winding 30' against the outer circumference of the lateral flanges 47A, 47B.

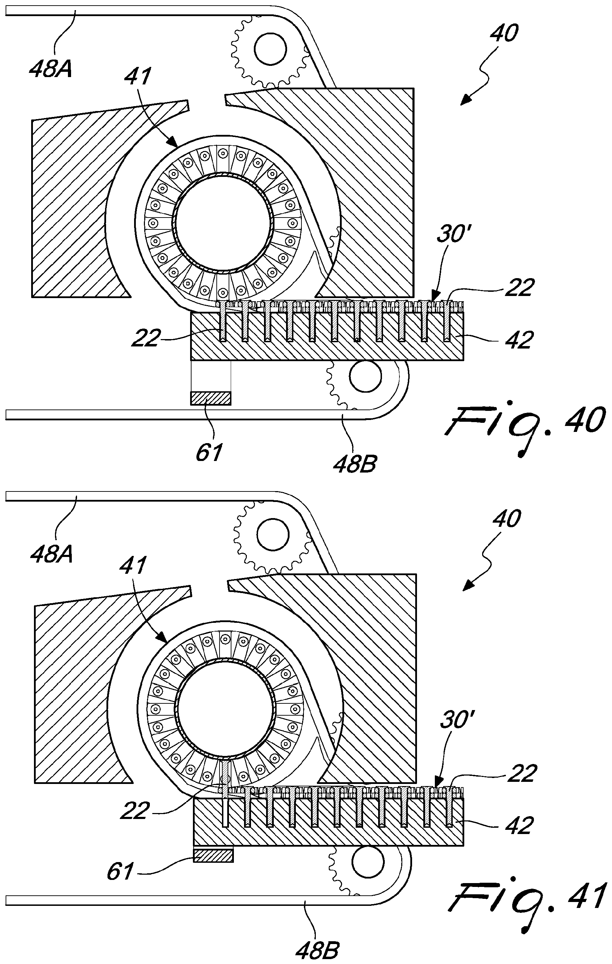

The coiling stops when the first inner tooth 22 is at the first of the seats with which the flanges 47A, 47B are provided (Figure 40). At this point the vertical presser 61, with a vertical movement, pushes the inner tooth 22 into the respective seat of the lateral flanges 47A, 47B where it will be kept in position by a respective sprung presser 49, while still leaving the outermost part of the inner tooth 22 engaged in the winding 30' so as to keep its position constrained with respect thereto (Figure 41).

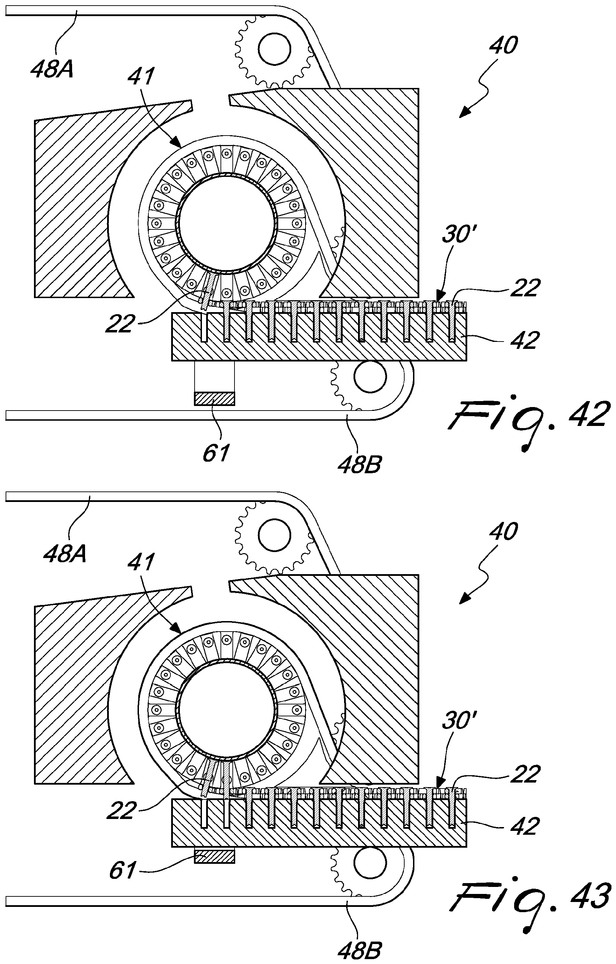

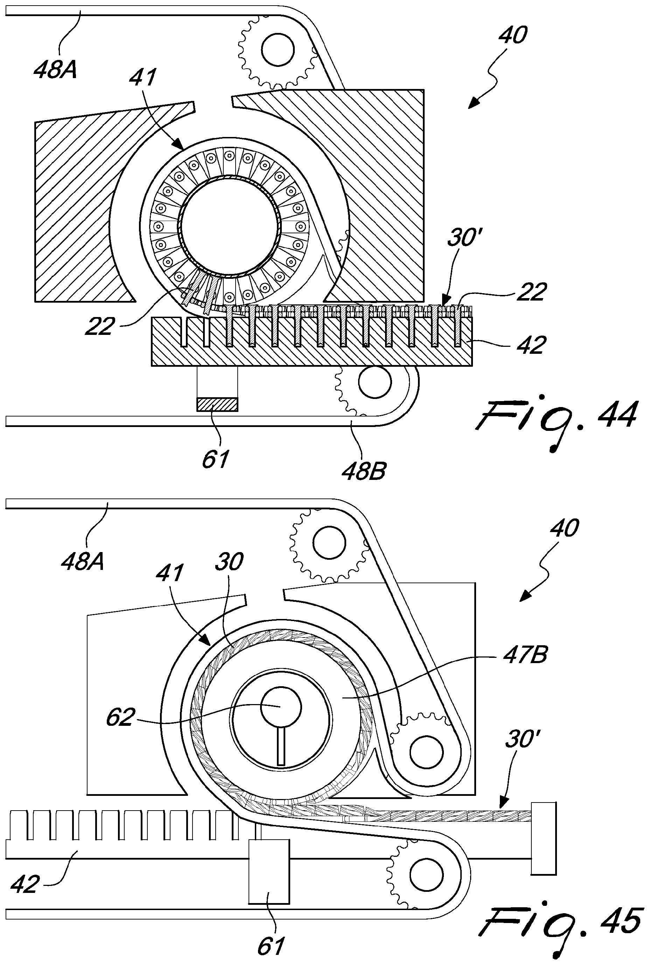

The vertical presser 61 returns to the initial position in order to allow the advancement by one step of the straight support 43 and the further rotation of the drum 41 until the second inner tooth 22 is at a seat, after the seat that was occupied previously (Figure 42); then, the vertical presser 61 pushes the second inner tooth 22 into the respective seat (Figure 43) and is then lowered once again (Figure 44).

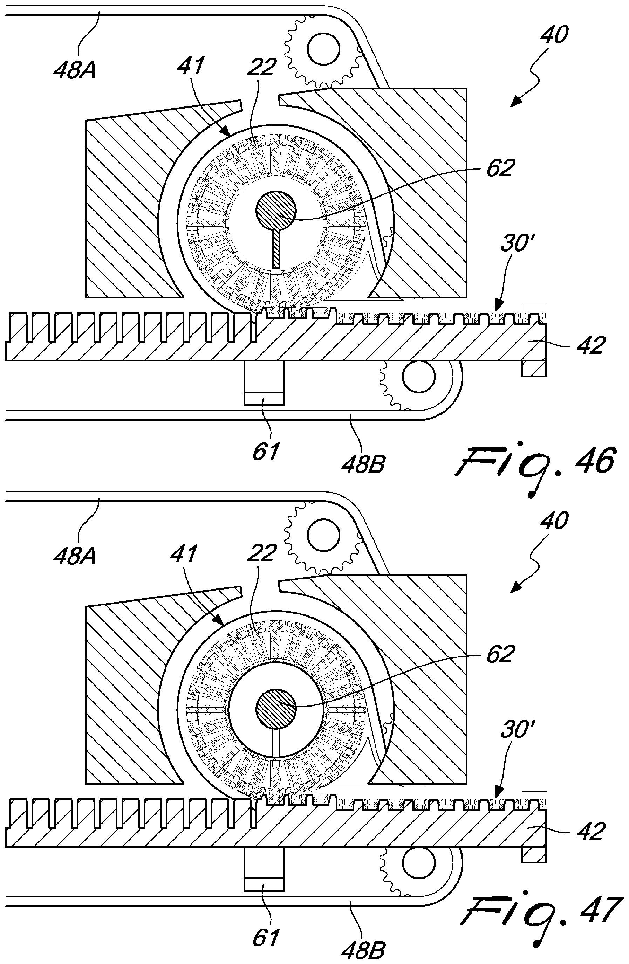

The method is repeated until the first peripheral portion Z1 of the winding 30 is wound about the drum 41 and the last inner tooth 22 is inserted into the respective seat of the lateral flanges 47A, 47B (Figure 46), i.e. until the drum 41 has made a complete rotation through 360°.

With the first complete rotation of the drum 41 finished, the first inner cylindrical layer S1 of the cylindrical winding 30 is formed. Then coiling begins of the winding 30' along the outer cylindrical layer S2, coiling the remaining straight winding 30' on top of the part that is already coiled.

In more detail, in this phase, with each advancement of a portion of the straight support 42 (and with the simultaneous rotation of the drum 41 by a corresponding angle), a radial ejector 62, positioned inside the drum 41 and configured to exert a centripetal pressure on the inner teeth 22, pushes an inner tooth 22 (Figure 47) radially outward, so that it at least partially frees up the seat that was occupied previously and also engages the outer cylindrical layer S2 of the winding 30, thus ensuring the correct positioning thereof.

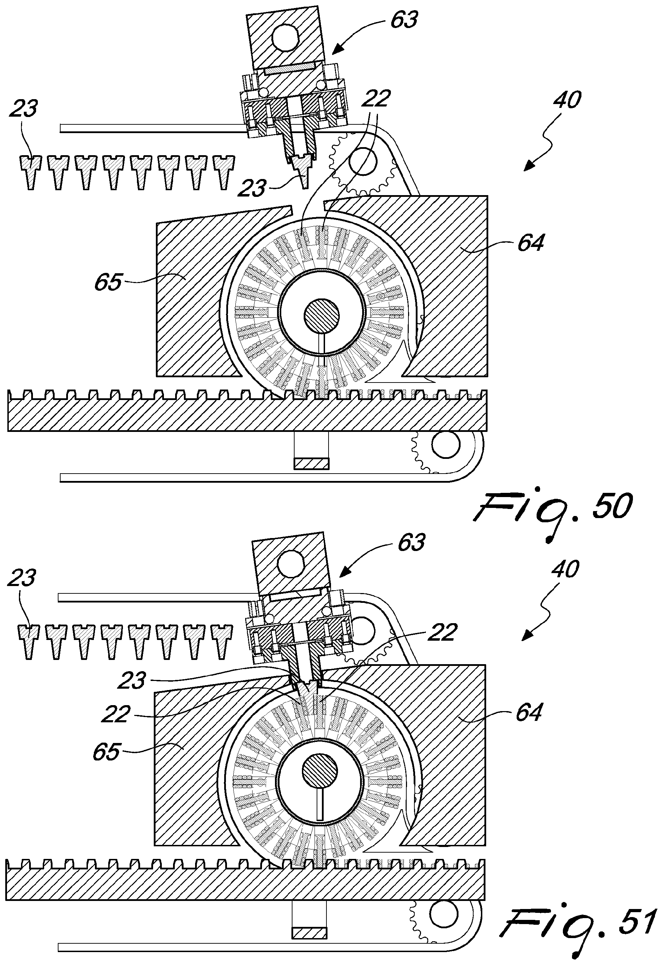

The rotations of the drum 41 and the action of the radial ejector on the subsequent inner teeth 22 continue in sequence until the condition shown in Figure 50 is reached, in which at least most of the inner teeth 22 have been pushed outward and more than half of the outer layer S2 has been coiled.

At this point, at each subsequent step of rotation of the drum 41, a handling device 63 (for example a prehensile robotic arm) starts positioning the outer teeth 23 in the final position, i.e. each one in the space comprised between two inner teeth (Figures 50-54).

During the successive rotations, a system of outer guides (which comprises preferably two lateral guides 64, 65) contains the outer teeth in the correct position by preventing radial displacements thereof, through a containment inner surface.

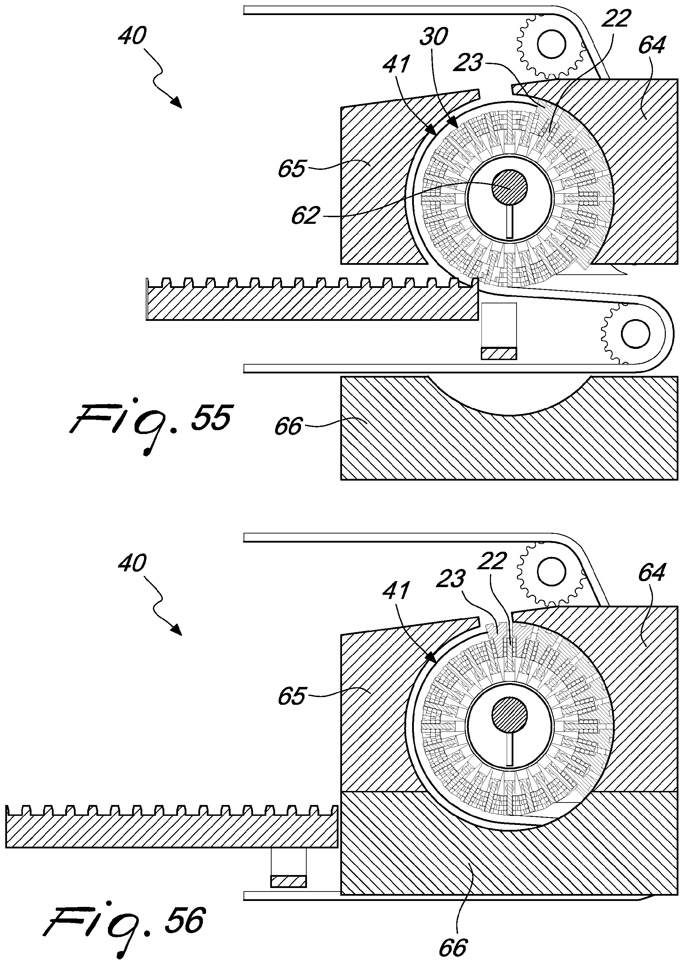

When the lateral guides 64, 65 are no longer capable of containing more outer teeth 23, a lower guide 66 is inserted which, coupled with the lateral guides 64, 65, defines an internal, substantially cylindrical containment surface (Figure 56).

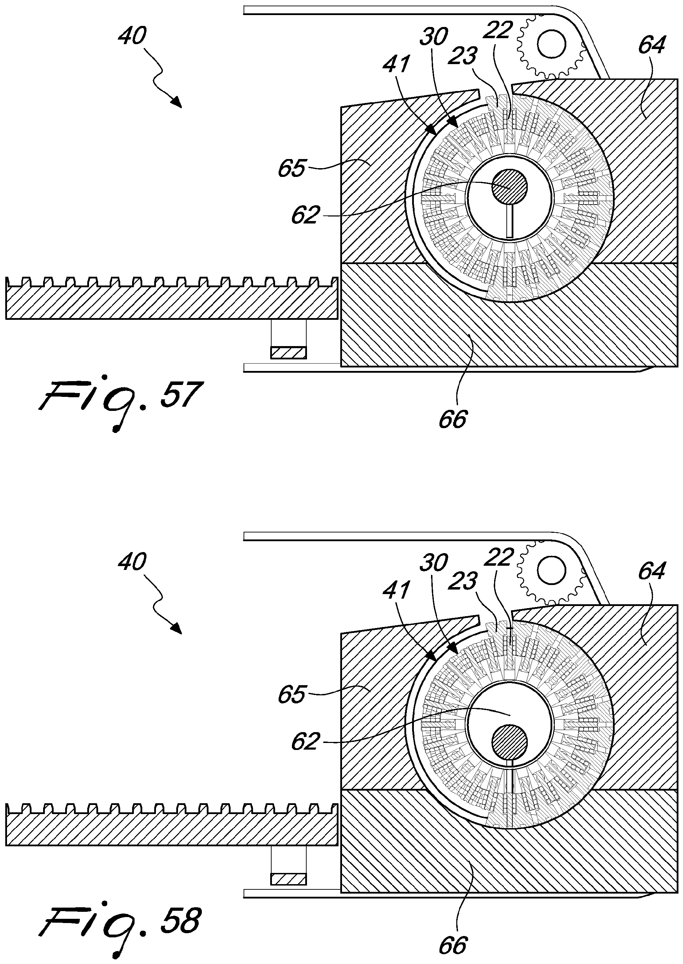

The method for inserting the outer teeth 23 then continues as previously described and at the same time the radial ejector 62 pushes the inner teeth 22 radially outward in succession so as to fit them in between the outer teeth 23 until all the outer teeth 23 are inserted, so as to form the ring that constitutes the hollow cylindrical body 20 of the stator 100 (Figures 57-60).

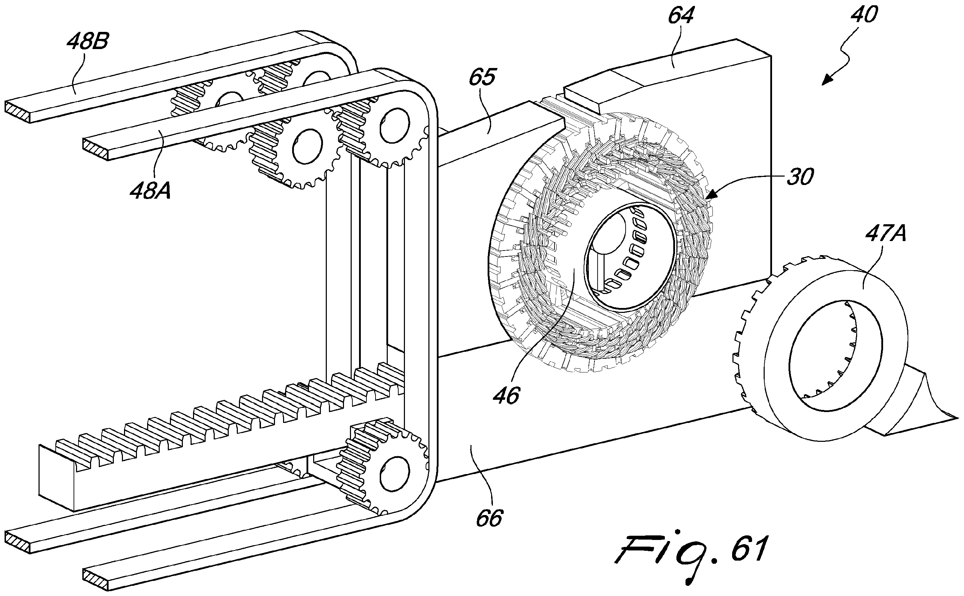

Once the operation just described is complete, the removable lateral flange 47A is removed, after conveniently disengaging the belts 48A, 48B (Figure 61).

Therefore, in the preferred embodiments, in the step of winding all of the outer teeth 23 are also inserted, from outside the cylindrical winding 30. At the end of this phase, the cylindrical winding 30 is positioned around the drum 41 together with the inner teeth 22 and outer teeth 23.

In general, in some embodiments the outer teeth 23 are inserted during the coiling, in other embodiments the outer teeth 23 are inserted after the coiling, before the step of repositioning the winding.

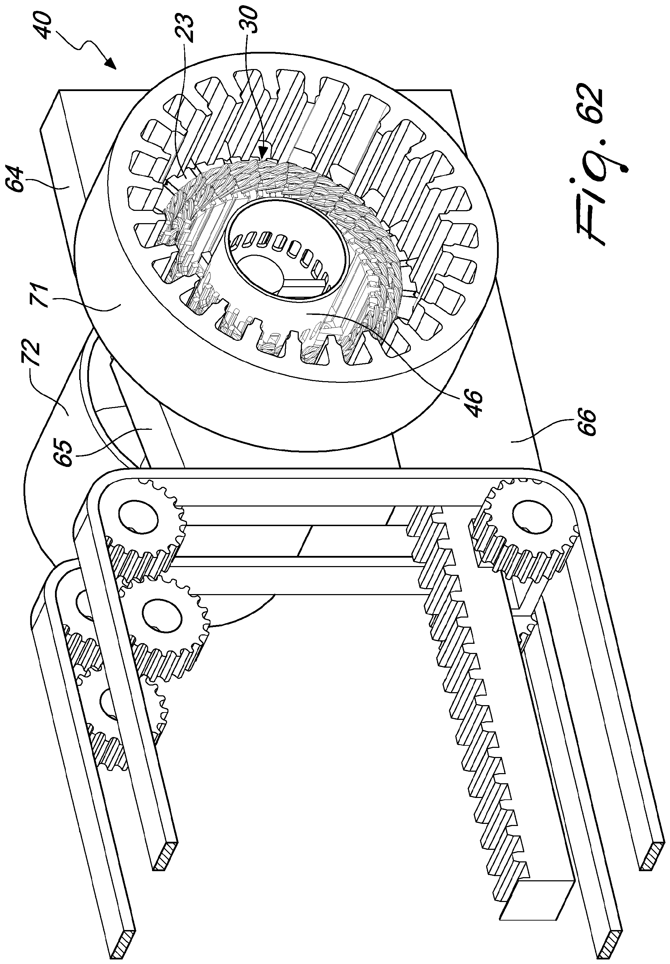

At this point the method entails a step of repositioning the winding 30 (shown in Figures 62-67), in which the cylindrical winding 30 together with the teeth 22, 23 which form the cylindrical body 20 are removed, integrally (i.e. so that they remain in the configuration in which they are at the end of the step of coiling just described), from the drum 41 and positioned in an apparatus for affixing teeth 80.

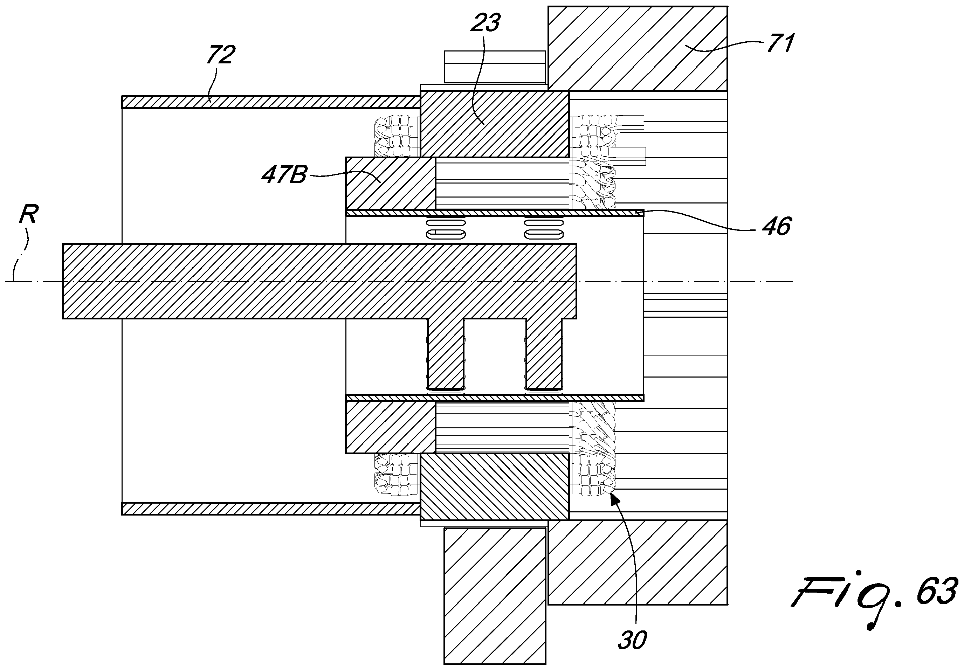

The step of repositioning is carried out for example by a gripping and movement assembly 70 which comprises a containment flange 71 and an expulsion flange 72 which are arranged at the two sides of the central tube 46, respectively on the side where the removable lateral flange 47A was accommodated and on the side where the other lateral flange 47B is accommodated (both outside the cylindrical winding 30), as shown in Figures 62 and 63.

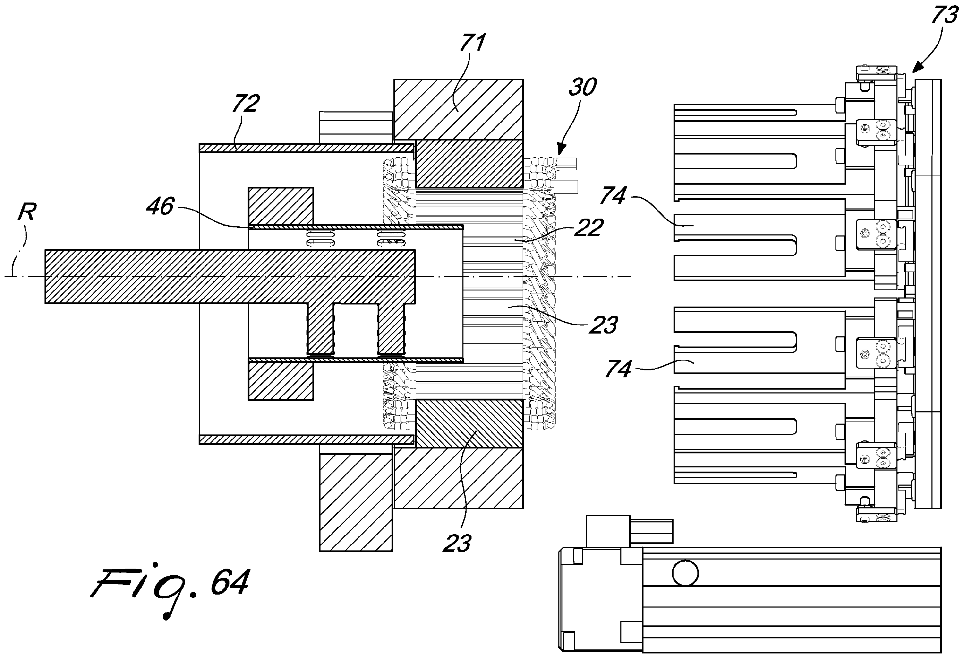

The expulsion flange 72 is then moved by an actuator (not shown) along the rotation axis R of the drum 41, abutting against the teeth 22, 23 and propelling the stator pack (i.e. the set of teeth 22, 23 and cylindrical winding 30) into the containment flange 71, slipping it off the central tube 46 (Figure 64).

Conveniently, the containment flange 71 is contoured so as to contain the outer teeth 23 of the stator pack and at the same time provide the necessary space to allow a clamp-like device 73 of the "multifinger" type (i.e. provided with a plurality of fingers 74 that protrude axially) to take the stator pack. The clamp-like device 73 is provided with adapted actuators 74, 75 and can be slid in a controlled manner along an axial guide 76.

The clamp-like device 73 then takes the stator pack from the containment flange 72, immobilizing the outer teeth with the fingers 74, and moves it to an apparatus for affixing teeth 80, in which the subsequent step of affixing the teeth 22, 23 is carried out in which the teeth 22, 23 are pressed and fixed (preferably welded) together so as to provide the stator 100.

The apparatus for affixing teeth 80 comprises at least one pressing assembly 81, 82 which is configured to radially press the teeth 22, 23 so as to align them along a same circumference and a welding assembly 83 which is configured to affix the teeth together so as to form the substantially cylindrical body 20.

In the preferred embodiments, the apparatus for affixing teeth 80 comprises a lower pressing assembly 81, an upper pressing assembly 82 and a welding assembly 83.

The lower pressing assembly 81 comprises a plurality of levers 85, and more precisely one lever 85 for each outer tooth 23 (in the example shown there are twenty-four outer teeth 23 and twenty-four levers 85) arranged circumferentially. The levers 85 are controlled by an actuator 86 which is functionally connected to a flange 87 which is connected through a sprung kinematic mechanism 88 to the levers 85.

Each lever 85 comprises a presser that interacts directly with a respective outer tooth 23 and which is connected to the rest of the lever by way of a tilting mechanical system in such a way as to center the respective outer tooth 23.

Inside the lower pressing assembly (inside the volume defined by the levers 85), where the fulcrums of the levers are accommodated, there is a mechanical command which, by way of kinematically-connected conical elements, expands and contracts an expandable central core 89 which is adapted to engage the cylindrical cavity 91 of the stator 100 and radially push the teeth 22, 23 outward.

At the base of the expandable central core 89 is a set of sprung male plugs.

The upper pressing assembly 82 is entirely similar to the lower pressing assembly 81, except for the expandable central core which is not present here, and is configured to radially press the inner teeth 22.

The upper pressing assembly 82 is connected to an external mobilization system and is configured to be moved with respect to the lower pressing assembly 81 so as to disengage it.

A system for resetting the levers 85 is comprised in the supporting flange 87.

The welding assembly 83 comprises a plurality of lasers 97 which can be moved around the lower pressing assembly 81 and which are configured to weld the teeth 22, 23 together from the outside.

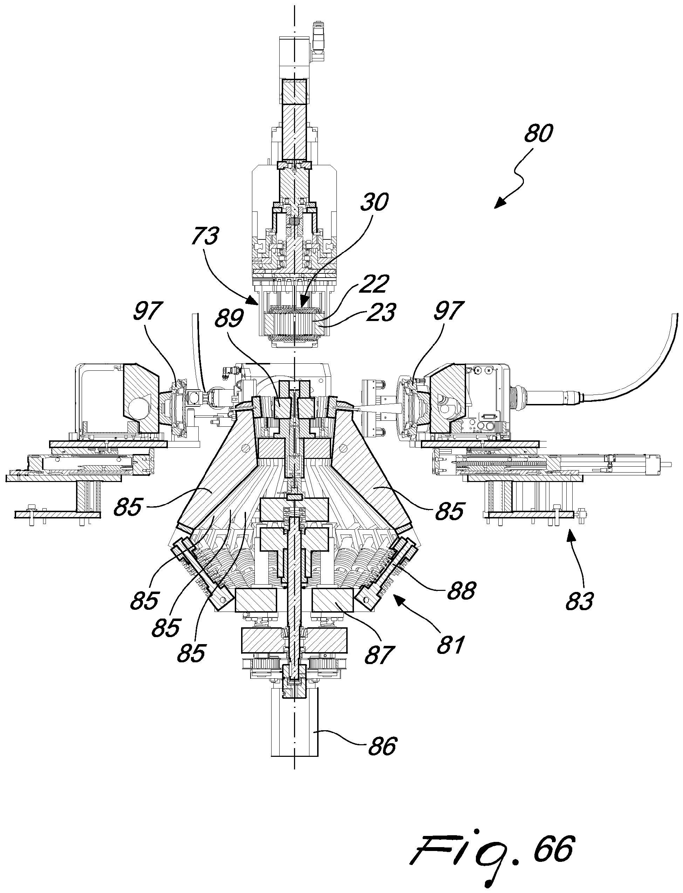

At the start of the step of affixing the teeth 22, 23 the apparatus for affixing teeth 80 is in an open configuration, in which the upper pressing assembly 82 is spaced apart from the lower pressing assembly 81 and the levers 85 are open (radially spaced apart) so as to receive the stator pack which is carried by the clamp-like device 73 (Figure 66).

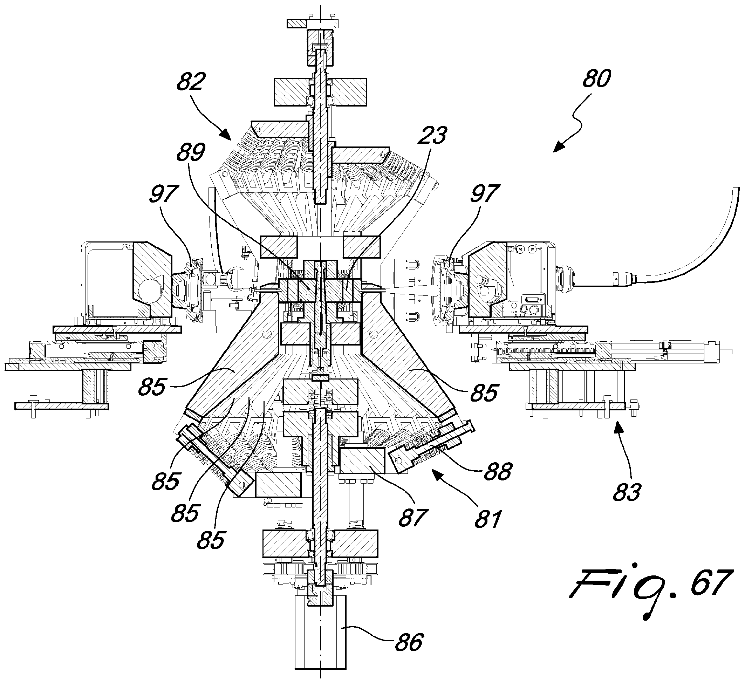

Once the stator pack is positioned inside the lower pressing assembly 81 between the levers 85, these are actuated so as to retain the teeth 23, and then the clamp-like device 73 is moved away and leaves room for the upper pressing assembly 82, which descends toward the lower pressing assembly 81 and stops at a predefined height so that it can press the inner teeth 22 (Figure 67).

The levers 85 of the lower pressing assembly 81 release the teeth 22, 23 which are pushed vertically, individually, by the sprung male plugs toward the resetting system, thus ensuring an alignment of the upper faces of all the teeth 22, 23.

At this point a pressing cycle is carried out, in which the teeth 22, 23 are pressed radially toward the expandable central core 89; more precisely, the outer teeth 23 are pressed by the levers 85 of the lower pressing assembly 81 and the inner teeth 22 are pressed by the levers of the upper pressing assembly 82.

After having pressed the teeth 22, 23 so as to suitably align them, the process of welding is carried out using the laser 97.

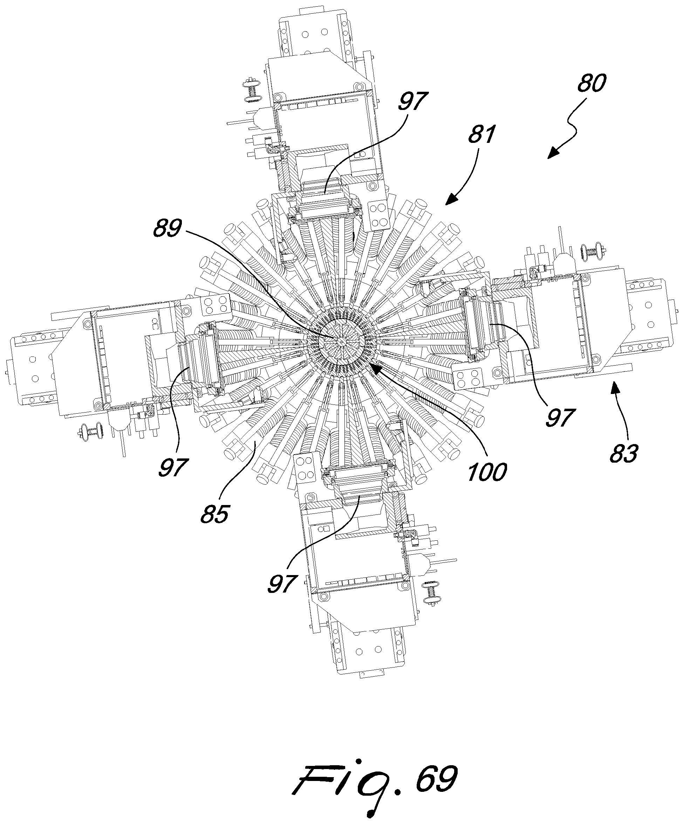

In order to allow the laser beams generated by the lasers 97 to penetrate the metal of the teeth 22, 23, the upper pressing assembly 82 is conveniently disengaged and moved away, so leaving space for the welding. During the welding, the levers 85 and the expandable central core 89 of the lower pressing assembly 81 ensure the position of the teeth 22, 23 (Figure 69).

Once the teeth 22, 23 are welded together, a stator as described previously is obtained, for example like the one shown in Figure 1.

In practice it has been found that the stator, the method for providing the stator and the processing line for carrying out the method, according to the present invention, achieve the intended aim and objects in that they make it possible to provide windings of the continuous hairpin type simply, reliably and at low cost.

Another advantage of the stator, of the method and of the processing line, according to the invention, consists in that they enable an optimal management of the pitch of the wires during the entire cycle of providing the stator pack.

Another advantage of the stator, of the method and of the processing line, according to the invention, consists in that it provides an alternative to the known art.

Another advantage of the stator, of the method and of the processing line, according to the invention, consists in that they ensure a high level of precision in the execution of the windings.

The stator, the method for providing the stator and the processing line for carrying out the method, thus conceived, are susceptible of numerous modifications and variations within the scope of the appended claims .

In practice the materials employed, and the contingent shapes and dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A stator (100) for electric motors, which comprises a plurality of teeth (22, 23) which are arranged circumferentially so as to form a substantially cylindrical hollow body (20) and which between them define a plurality of inner longitudinal cavities (21) which are arranged radially: inside said inner longitudinal cavities (21) there being arranged a plurality of bent wires (J1-J12) which form at least one cylindrical winding (30),
said teeth (23, 22) comprising a plurality of inner teeth (22) which are inserted radially from the inside of the cylindrical winding (30) before the cylindrical winding is converted from a flattened straight winding (30'), and a plurality of complementary outer teeth (23); said inner teeth (22) and said outer teeth (23) being welded together so as to form a continuous ring, **characterized in that** said outer teeth (23) are inserted radially from the outside of the cylindrical winding (30), wherein each one of said inner longitudinal cavities (21) is defined in one of said outer teeth (23),
said inner teeth (22) being provided with feet (29) along the surface that defines said inner cylindrical cavity (91); said feet (29) closing at least partially the inner longitudinal cavities (21) toward the inner cylindrical cavity (91), including behind them said bent wires (J1-J12), said inner teeth (22) being positioned so that each inner teeth (22) has two adjacent outer teeth (23) at each one of its sides.

2. A method for providing a stator according to claim 1, comprising:
- a step of bending, in which a plurality of wires (J1-J12) are bent;
- a step of winding, in which the bent wires (J1-J12) are wound together so as to provide a flattened straight winding (30') of wires which comprises a plurality of mutually parallel straight sections of wire (1A-12A, 1B-12B);
- a step of inserting the inner stator teeth (22), in which a plurality of inner teeth (22) are inserted into the flattened straight winding (30'), in between said straight sections (1A-12B, 1B-12B) of the wires (J1-J12);
- a step of coiling, in which said flattened straight winding (30') is curved along a cylindrical surface by rolling it at least twice around a drum (41) so as to convert said flattened straight winding (30') to a cylindrical winding (30) which is wound at least twice onto itself so as to be arranged continuously along an inner cylindrical layer (S1) and along an outer cylindrical layer (S2) which is concentric to said inner cylindrical layer (S1); in addition a plurality of outer teeth (23) being inserted from outside said cylindrical winding ; said cylindrical winding (30) being positioned around said drum (41) together with said inner teeth (22) and said outer teeth (23);
- a step of repositioning the winding, in which said cylindrical winding (30), together with the teeth (22, 23), is slid off said drum (41) and positioned in an apparatus for affixing teeth (80);
- a step of affixing the teeth (22, 23) in which the teeth (22, 23) are affixed to each other so as to provide the stator (100);
- in said step of inserting the inner teeth (22) said flattened straight winding (30') is positioned on a straight support (42) which is provided with a plurality of first transverse slots (43) which are partially engaged by the inner teeth (22) and with a plurality of second transverse slots (44) which are engaged by the straight sections (1A-12A, 1B-12B) of wire which are not engaged by said inner teeth (22).

3. The method according to claim 2, **characterized in that**, in said step of coiling, said flattened straight winding (30') is coiled against the outer circumference of two lateral flanges (47A, 47B) of the drum (41) and said inner teeth (22) are first pushed radially into respective seats in said lateral flanges (47A, 47B) and then are pushed radially outward so that said inner teeth (22) free up at least partially the seats that were occupied previously and engage the outer cylindrical layer (S2) of the cylindrical winding (30).

4. The method according to one or more of claims 2-3, **characterized in that**, in said step of repositioning the winding, a containment flange (71) and an expulsion flange (72) are arranged at the two sides of said drum (41), coaxially to the cylindrical winding (30), and then the expulsion flange (72) is moved so as to push the teeth (22, 23), together with the cylindrical winding (30), into the containment flange (71), slipping them off the drum (41) and subsequently
the assembly of the teeth (22, 23) and the cylindrical winding (30) is taken from the containment flange (72) and moved to an apparatus for affixing teeth (80).

5. A processing line for carrying out a method according to one or more of claims 2-3, comprising:
- a bending apparatus (140) configured to carry out said step of bending;
- a winding assembly (50) configured to carry out said step of winding;
- a coiling apparatus (40) configured to carry out said step of coiling;
- a gripping and movement assembly (70) configured to carry out said step of repositioning;
- an apparatus for affixing teeth (80) configured to carry out said step of affixing the teeth;
- said coiling apparatus (40) comprises a coiling drum (41) which comprises a central tube (46) and two lateral flanges (47A, 47B) which are coupled coaxially to said central tube (46) and which have an outer diameter greater than said central tube (46) and are integral in rotation with said central tube (46); the outer circumference of said lateral flanges (47A, 47B) being configured to act as a core onto which said flattened straight winding (30') is wound; said drum (41) being guided in rotation about a rotation axis (R) by a motor so as to coil said flattened straight winding (30') against the outer circumference of the lateral flanges (47A, 47B).

6. The processing line according to claim 5, **characterized in that** said coiling apparatus (40) comprises a vertical presser (61) which is positioned outside said drum (41) and is configured to exert, on the inner teeth (22) to be inserted, a radial pressure toward said rotation axis (R) of the drum (41).

7. The processing line according to claim 5 or 6, **characterized in that** said coiling apparatus (40) comprises a radial ejector (62) which is positioned inside the drum (41) and is configured to exert a centripetal pressure on the inner teeth (22).

## Patentansprüche

1. Ein Stator (100) für Elektromotoren, der eine Vielzahl von Zähnen (22, 23) umfasst, die am Umfang angeordnet sind, um einen im Wesentlichen zylindrischen Hohlkörper (20) zu bilden, und die zwischen sich eine Vielzahl innerer länglicher Hohlräume (21) bestimmen, welche radial angeordnet sind, wobei innerhalb der inneren länglichen Hohlräume (21) eine Vielzahl gebogener Drähte (J1-J12) angeordnet ist, die mindestens eine Zylinderwicklung (30) bilden,
wobei die Zähne (23, 22) eine Vielzahl innerer Zähne (22) umfassen, welche radial von der Innenseite der Zylinderwicklung (30) eingesetzt werden, bevor die Zylinderwicklung aus einer abgeflachten Parallelwicklung (30') umgewandelt wird, und eine Vielzahl komplementärer äußerer Zähne (23); wobei die inneren Zähne (22) und die äußeren Zähne (23) zusammengeschweißt sind, um einen durchgehenden Ring zu bilden;
**dadurch gekennzeichnet, dass** die äußeren Zähne (23) radial von der Außenseite der Zylinderwicklung (30) eingesetzt werden, wobei jeder der inneren länglichen Hohlräume (21) in einem der äußeren Zähne (23) bestimmt ist,
wobei die inneren Zähne (22) entlang der Oberfläche, welche den inneren zylindrischen Hohlraum (91) bestimmt, mit Füßen (29) ausgestattet sind; wobei die Füße (29) die inneren länglichen Hohlräume (21) zumindest teilweise zum inneren zylindrischen Hohlraum (91) hin verschließen und hinter sich die gebogenen Drähte (J1-J12) einschließen, wobei die inneren Zähne (22) so positioniert sind, dass jeder innere Zahn (22) an jeder seiner Seiten zwei benachbarte äußere Zähne (23) hat.

2. Ein Verfahren zur Herstellung eines Stators gemäß Anspruch 1, das Folgendes umfasst:
- einen Schritt des Biegens, in welchem eine Vielzahl von Drähten (J1-J12) gebogen wird;
- einen Schritt des Wickelns, in welchem die gebogenen Drähte (J1-J12) zusammengewickelt werden, um eine abgeflachte Parallelwicklung (30') von Drähten zu bilden, die eine Vielzahl zueinander paralleler gerader Abschnitte von Draht (1A-12A, 1B-12B) umfasst;
- einen Schritt des Einsetzens der inneren Statorzähne (22), in welchem eine Vielzahl innerer Zähne (22) in die abgeflachte Parallelwicklung (30'), zwischen die geraden Abschnitte (1A-12B, 1B-12B) der Drähte (J1-J12), eingesetzt wird;
- einen Schritt des Aufspulens, in welchem die abgeflachte Parallelwicklung (30') entlang einer zylindrischen Oberfläche gekrümmt wird durch mindestens zweifaches Aufrollen derselben um eine Trommel (41), um die abgeflachte Parallelwicklung (30') in eine Zylinderwicklung (30) umzuwandeln, die mindestens zweimal um sich selbst gewickelt wird, um kontinuierlich entlang einer inneren zylindrischen Schicht (S1) und entlang einer äußeren zylindrischen Schicht (S2) angeordnet zu werden, welche konzentrisch mit der inneren zylindrischen Schicht (S1) ist; wobei zusätzlich eine Vielzahl äußerer Zähne (23) von außerhalb der Zylinderwicklung eingesetzt wird; wobei die Zylinderwicklung (30) gemeinsam mit den inneren Zähnen (22) und den äußeren Zähnen (23) um die Trommel (41) herum positioniert wird;
- einen Schritt des Neupositionierens der Wicklung, in welchem die Zylinderwicklung (30), gemeinsam mit den Zähnen (22, 23), von der Trommel (41) heruntergeschoben und in eine Vorrichtung zur Befestigung von Zähnen (80) positioniert wird;
- einen Schritt des Befestigens der Zähne (22, 23), in welchem die Zähne (22, 23) aneinander befestigt werden, um den Stator (100) zu bilden;
- in dem Schritt des Einsetzens der inneren Zähne (22) wird die abgeflachte Parallelwicklung (30') auf einem geraden Träger (42) positioniert, der mit einer Vielzahl erster transversaler Schlitze (43) versehen ist, welche teilweise in Eingriff mit den inneren Zähnen (22) stehen, und mit einer Vielzahl zweiter transversaler Schlitze (44), die in Eingriff mit den geraden Abschnitten (1A-12A, 1B-12B) von Draht stehen, welche nicht in Eingriff mit den inneren Zähnen (22) stehen.

3. Das Verfahren gemäß Anspruch 2, **dadurch gekennzeichnet, dass** in dem Aufspulschritt die abgeflachte Parallelwicklung (30') gegen den Außenumfang zweier Seitenflansche (47A, 47B) der Trommel (41) aufgespult wird und die inneren Zähne (22) zunächst radial in entsprechende Sitze in den Seitenflanschen (47A, 47B) und dann radial nach außen geschoben werden, so dass die inneren Zähne (22) zumindest teilweise die zuvor besetzten Sitze freilegen und in die äußere zylindrische Schicht (S2) der Zylinderwicklung (30) eingreifen.

4. Das Verfahren gemäß einem oder mehreren der Ansprüche 2-3, **dadurch gekennzeichnet, dass** in dem Schritt des Neupositionierens der Wicklung ein Aufnahmeflansch (71) und ein Ausstoßflansch (72) an den beiden Seiten der Trommel (41), koaxial mit der Zylinderwicklung (30), angeordnet werden und dann der Ausstoßflansch (72) bewegt wird, um die Zähne (22, 23), gemeinsam mit der Zylinderwicklung (30), in den Aufnahmeflansch (71) zu schieben, wodurch sie von der Trommel (41) geschoben werden, und anschließend
die Anordnung der Zähne (22, 23) und die Zylinderwicklung (30) vom Aufnahmeflansch (72) genommen und zu einer Vorrichtung für die Befestigung von Zähnen (80) bewegt werden.

5. Eine Fertigungsstraße zur Durchführung eines Verfahrens gemäß einem oder mehreren der Ansprüche 2-3, die Folgendes umfasst:
- eine Biegevorrichtung (140), ausgebildet, um den Biegeschritt durchzuführen;
- einen Wicklungsaufbau (50), ausgebildet, um den Wickelschritt durchzuführen;
- eine Aufspulvorrichtung (40), ausgebildet, um den Aufspulschritt durchzuführen;
- einen Greif- und Bewegungsaufbau (70), ausgebildet, um den Neupositionierschritt durchzuführen;
- eine Vorrichtung zur Befestigung von Zähnen (80), ausgebildet, um den Schritt der Befestigung der Zähne durchzuführen;
- die Aufspulvorrichtung (40) umfasst eine Aufspultrommel (41), die eine zentrale Röhre (46) und zwei Seitenflansche (47A, 47B) umfasst, welche koaxial mit der zentralen Röhre (46) gekoppelt sind, einen Außendurchmesser haben, der größer ist als die zentrale Röhre (46) und in der Rotation integral mit der zentralen Röhre (46) sind; wobei der Außenumfang der Seitenflansche (47A, 47B) ausgebildet ist, um als Kern zu dienen, auf welchen die abgeflachte Parallelwicklung (30') aufgewickelt wird; wobei die Trommel (41) von einem Motor in der Drehung um eine Rotationsachse (R) geführt wird, um die abgeflachte Parallelwicklung (30') gegen den Außenumfang der Seitenflansche (47A, 47B) aufzuspulen.

6. Die Fertigungsstraße gemäß Anspruch 5, **dadurch gekennzeichnet, dass** die Aufspulvorrichtung (40) eine vertikale Druckvorrichtung (61) umfasst, die außerhalb der Trommel (41) positioniert und ausgebildet ist, um auf die inneren einzusetzenden Zähne (22) einen radialen Druck zu der Rotationsachse (R) der Trommel (41) hin auszuüben.

7. Die Fertigungsstraße gemäß Anspruch 5 oder 6, **dadurch gekennzeichnet, dass** die Aufspulvorrichtung (40) eine radiale Ausstoßvorrichtung (62) umfasst, die in die Trommel (41) positioniert und ausgebildet ist, um einen zentripetalen Druck auf die inneren Zähne (22) auszuüben.

## Revendications

1. Stator (100) pour moteurs électriques, qui comprend une pluralité de dents (22, 23) qui sont agencées de manière circonférentielle afin de former un corps creux (20) sensiblement cylindrique et qui définissent entre elles, une pluralité de cavités longitudinales internes (21) qui sont agencées de manière radiale ; à l'intérieur desdites cavités longitudinales internes (21), on agence une pluralité de fils pliés (J1-J12) qui forment au moins un enroulement cylindrique (30),
lesdites dents (23, 22) comprenant une pluralité de dents internes (22) qui sont insérées de manière radiale depuis l'intérieur de l'enroulement cylindrique (30) avant que l'enroulement cylindrique ne soit converti à partir d'un enroulement droit aplati (30'), et une pluralité de dents externes complémentaires (23) ; lesdites dents internes (22) et lesdites dents externes (23) étant soudées ensemble afin de former un anneau continu,
**caractérisé en ce que** lesdites dents externes (23) sont insérées radialement à partir de l'extérieur de l'enroulement cylindrique (30), dans lequel chacune desdites cavités longitudinales internes (21) est définie dans l'une desdites dents externes (23),
lesdites dents internes (22) étant prévues avec des pieds (29) le long de la surface qui définit ladite cavité cylindrique interne (91) ; lesdits pieds (29) fermant au moins partiellement les cavités longitudinales internes (21) vers la cavité cylindrique interne (91), comprenant, derrière eux, lesdits fils pliés (J1-J12), lesdites dents internes (22) étant positionnées de sorte que chaque dent interne (22) a deux dents externes (23) adjacentes au niveau de chacun de ses côtés.

2. Procédé pour fournir un stator selon la revendication 1, comprenant :
une étape de pliage, dans laquelle une pluralité de fils (J1-J12) sont pliés ;
une étape d'enroulement, dans laquelle les fils pliés (J1-J12) sont enroulés ensemble afin de fournir un enroulement droit aplati (30') de fils qui comprend une pluralité de sections droites mutuellement parallèles du fil (1A-12A, 1B-12B) ;
une étape d'insertion des dents internes (22) de stator, dans laquelle une pluralité de dents internes (22) sont insérées dans l'enroulement droit aplati (30'), entre lesdites sections droites (1A-12A, 1B, 12B) des fils (J1-J12) ;
une étape de bobinage, dans laquelle ledit enroulement droit aplati (30') est courbé le long d'une surface cylindrique en le faisant rouler au moins deux fois autour d'un tambour (41) afin de convertir ledit enroulement droit aplati (30') en un enroulement cylindrique (30) qui est enroulé au moins deux fois sur lui-même afin d'être agencé, de manière continue, le long d'une couche cylindrique interne (S1) et le long d'une couche cylindrique externe (S2) qui est concentrique à ladite couche cylindrique interne (S1) ; de plus, une pluralité de dents externes (23) étant insérées depuis l'extérieur dudit enroulement cylindrique ; ledit enroulement cylindrique (30) étant positionné autour dudit tambour (41) conjointement avec lesdites dents internes (22) et lesdites dents externes (23) ;
une étape de repositionnement de l'enroulement, dans laquelle ledit enroulement cylindrique (30) conjointement avec les dents (22, 23), glisse hors dudit tambour (41) et est positionné dans un appareil pour fixer les dents (80) ;
une étape de fixation de dents (22, 23), dans laquelle les dents (22, 23) sont fixées entre elles afin de fournir le stator (100) ;
à ladite étape d'insertion des dents internes (22), ledit enroulement droit aplati (30') est positionné sur un support droit (42) qui est prévu avec une pluralité de premières fentes transversales (43) qui sont partiellement mises en prise par les dents internes (22) et avec une pluralité de secondes fentes transversales (44) qui sont mises en prise par les sections droites (1A-12A, 1B, 12B) de fil qui ne sont pas mises en prise par lesdites dents internes (22).

3. Procédé selon la revendication 2, **caractérisé en ce que**, à ladite étape de bobinage, ledit enroulement droit aplati (30') est enroulé contre la circonférence externe de deux brides latérales (47A, 47B) du tambour (41) et lesdites dents internes (22) sont tout d'abord poussées radialement dans des sièges respectifs dans lesdites brides latérales (47A, 47B) et sont ensuite poussées radialement vers l'extérieur de sorte que lesdites dents internes (22) libèrent au moins partiellement les sièges qui ont été précédemment occupés et mettent en prise la couche cylindrique externe (S2) de l'enroulement cylindrique (30).

4. Procédé selon une ou plusieurs des revendications 2 à 3, **caractérisé en ce que**, à ladite étape de repositionnement de l'enroulement, une bride de confinement (71) et une bride d'expulsion (72) sont agencées des deux côtés dudit tambour (41), de manière coaxiale à l'enroulement cylindrique (30) et ensuite la bride d'expulsion (72) est déplacée afin de pousser les dents (22, 23) conjointement avec l'enroulement cylindrique (30), dans la bride de confinement (71), les faisant glisser hors du tambour (41) et par conséquent,
l'ensemble composé des dents (22, 23) et de l'enroulement cylindrique (30) est pris de la bride de confinement (72) et déplacé vers un appareil pour fixer les dents (80).

5. Ligne de traitement pour réaliser un procédé selon une ou plusieurs des revendications 2 à 3, comprenant :
un appareil de pliage (140) configuré pour réaliser ladite étape de pliage ;
un ensemble d'enroulement (50) configuré pour réaliser ladite étape d'enroulement ;
un appareil de bobinage (40) configuré pour réaliser ladite étape de bobinage ;
un ensemble de préhension et de déplacement (70) configuré pour réaliser ladite étape de repositionnement ;
un appareil pour fixer les dents (80) configuré pour réaliser ladite étape de fixation des dents ;
ledit appareil de bobinage (40) comprenant un tambour de bobinage (41) qui comprend un tube central (46) et deux brides latérales (47A, 47B) qui sont couplées de manière coaxiale par rapport audit tube central (46) et qui ont un diamètre externe supérieur audit tube central (46) et sont solidaires en rotation avec ledit tube central (46) ; la circonférence externe desdites brides latérales (47A, 47B) étant configurée pour servir de noyau sur lequel ledit enroulement droit aplati (30') est enroulé ; ledit tambour (41) étant guidé en rotation autour d'un axe de rotation (R) par un moteur pour bobiner ledit enroulement droit aplati (30') contre la circonférence externe des brides latérales (47A, 47B).

6. Ligne de traitement selon la revendication 5, **caractérisé en ce que** ledit appareil de bobinage (40) comprend un presseur vertical (61) qui est positionné à l'extérieur dudit tambour (41) et est configuré pour exercer, sur les dents internes (22) à insérer, une pression radiale vers ledit axe de rotation (R) du tambour (41).

7. Ligne de traitement selon la revendication 5 ou 6, **caractérisé en ce que** ledit appareil de bobinage (40) comprend un éjecteur radial (62) qui est positionné à l'intérieur du tambour (41) et est configuré pour exercer une pression centripète sur les dents internes (22).
